# EUROPEAN PATENT APPLICATION

(11) **EP 4 572 321 A1**
(43) Date of publication of application: **18.06.2025**
(21) Application number: 24219164.1
(22) Date of filing: 11.12.2024
(51) Int. Cl.: H04N 23/90

(54) **TERMINAL APPARATUS, CONTROL METHOD, AND PROGRAM**

(30) Priority: 12.12.2023 JP 2023209549
(71) Applicant: CANON KABUSHIKI KAISHA, Tokyo 146-8501 (JP)
(72) Inventor: TSUBOI, Satoru, Tokyo, 146-8501 (JP)
(74) Representative: Canon Europe Limited

(57) **Abstract**

A terminal apparatus performs processing (S 1003) of accepting input of an image data set formed by a plurality of image data, generating (S 1003) processed data by performing image processes on the image data, and executing (S1004) output of the processed data to an output buffer, the processing needing a predetermined time from the input to the output; reads out (S 1303) the processed data from the output buffer and output the processed data to a communication line; and controls (S706) such that the processed data stored in the output buffer is not output to the communication line during a predetermined time from the input of the image data of the image data set until first processed data of the image data set is output to the output buffer.

## Description

### BACKGROUND OF THE INVENTION

### Field of the Invention

The present invention relates to a technique of suppressing output of unnecessary image data in an image processing system that executes a plurality of image processes.

### Description of the Related Art

Recently, a technique of performing control while maintaining time synchronization among a plurality of apparatuses connected via a network is widely used. For example, in the image processing field or the image transmission field, an image capturing timing is generated based on time synchronized between apparatuses, and image capturing (synchronous image capturing) is performed while maintaining synchronization between a plurality of terminals (cameras or the like) by using the image capturing timing. Japanese Patent Laid-Open No. 2017-211827 describes a virtual viewpoint image generation system that performs synchronous image capturing at a plurality of viewpoints using a plurality of cameras installed at different positions and generates a virtual viewpoint content using images at the plurality of viewpoints obtained by the synchronous image capturing. To generate such virtual viewpoint images with high quality, image capturing timings need to be accurately synchronized. As a protocol for accurately synchronizing time among a plurality of terminals, the Precision Time Protocol (PTP) is widely used. On the other hand, Japanese Patent Laid-Open No. 2004-312059 describes, as an image data transmission technique, a technique of, using an arbitrary frame as a reference frame at the time of encoding, accumulating, in a medium, an encoded bitstream obtained by encoding based on the reference frame or a technique of transmitting it to a network.

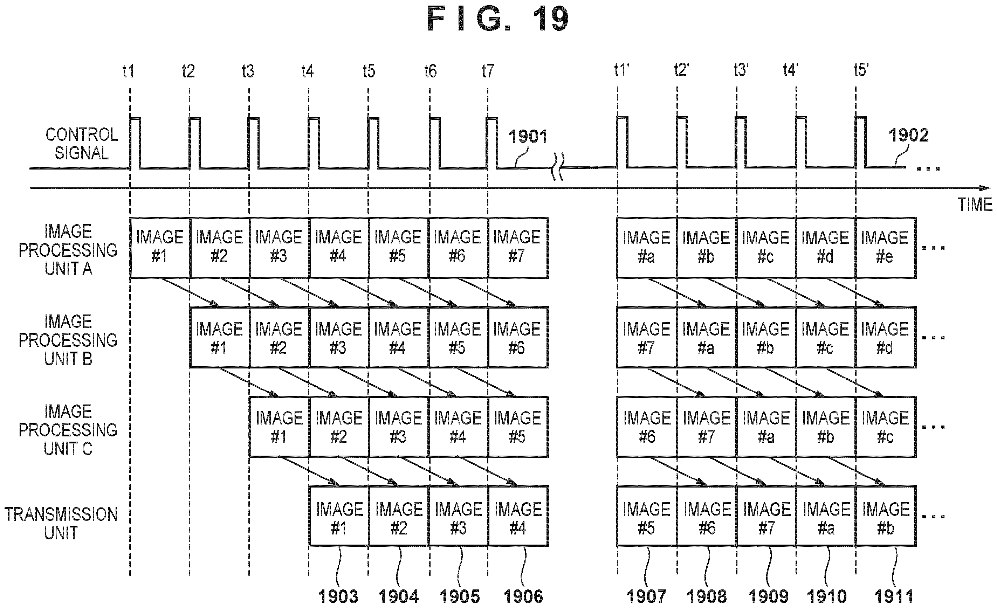

In general, when transmitting an image captured by a camera or the like to a network, a plurality of image processes are performed for the image data. The plurality of image processes can be executed using, for example, pipeline processing. Fig. 19 shows an example of an operation of pipeline processing constituted by a plurality of image processes. Fig. 19 shows an example in which image processing units A to C execute image processes on image data 1903 to 1911 and output these to a network via a transmission unit. For example, in pipeline processing, control can be performed such that a control signal that is a pulse signal having a predetermined period is input to each function unit, and each function unit performs processing at the timing of the pulse of the control signal. For example, at timing t1, the image processing unit A processes the image 1903 and outputs it to the image processing unit B. At timing t2, the image processing unit A and the image processing unit B process the image 1904 and the image 1903, respectively, and output these to the image processing unit B and the image processing unit C. The image data processed in the pipeline are finally packetized in the transmission unit and output to the network. Here, in Fig. 19, output of the control signal is stopped after timing t7 and resumed at timing t1'. At this time, images (images 1910 and 1911) of a sequence different from the images (images 1903 to 1909) processed to that point may be the targets to be processed. In this case, the image 1907 to 1909 can be output from the transmission unit before the images 1910 and 1911 reach the transmission unit. That is, the images 1907 to 1909 processed before the stop may be output to the network, although these are different from the images of the sequence designated at the time of resumption. As a result, the images that need not be transmitted use the network resource, and the images that the user does not want may be displayed.

### SUMMARY OF THE INVENTION

The present invention provides a technique of suppressing output of unnecessary image data in an image processing system that executes a plurality of image processes.

The present invention in its first aspect provides a terminal apparatus as specified in claims 1 to 8. The present invention in its second aspect provides a control method as specified in claim 9. The present invention in its third aspect provides a program as specified in claim 10.

Further features of the present invention will become apparent from the following description of embodiments with reference to the attached drawings.

### BRIEF DESCRIPTION OF THE DRAWINGS

Fig. 1 is a view showing an example of the configuration of an image processing system;
Fig. 2 is a view showing an example of the configuration of a camera adapter;
Fig. 3 is view showing an example of a data configuration in an external storage unit;
Fig. 4 is a view showing an example of pipeline processing in the camera adapter;
Fig. 5 is a view showing an example of the configuration of a signal generation unit;
Fig. 6 is a view showing the relationship between a reference signal, a control signal A, and a control signal B;
Fig. 7 is a flowchart showing an example of the operation procedure of a CPU;
Fig. 8 is a flowchart showing an example of the operation procedure of a reference signal generation unit;
Fig. 9 is a flowchart showing an example of the operation procedure of a control signal generation unit;
Fig. 10 is a flowchart showing an example of the operation procedure of an image processing unit A;
Fig. 11 is a flowchart showing an example of the operation procedure of an image notification unit;
Fig. 12 is a flowchart showing an example of the operation procedure of a transmission instruction unit;
Fig. 13 is a flowchart showing an example of the operation procedure of a transmission unit;
Fig. 14 is a flowchart showing an example of the operation procedure of a control signal generation unit;
Fig. 15 is a flowchart showing an example of the operation procedure of an image notification unit;
Fig. 16 is a view showing an example of pipeline processing in a camera adapter;
Fig. 17 is a flowchart showing an example of the operation procedure of a control signal generation unit;
Fig. 18 is a flowchart showing an example of the operation procedure of an image notification unit;
Fig. 19 is a view showing an example of the operation of pipeline processing; and
Fig. 20 is a view showing an example of the hardware configuration of a camera adapter.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (First Embodiment)

### (System Configuration)

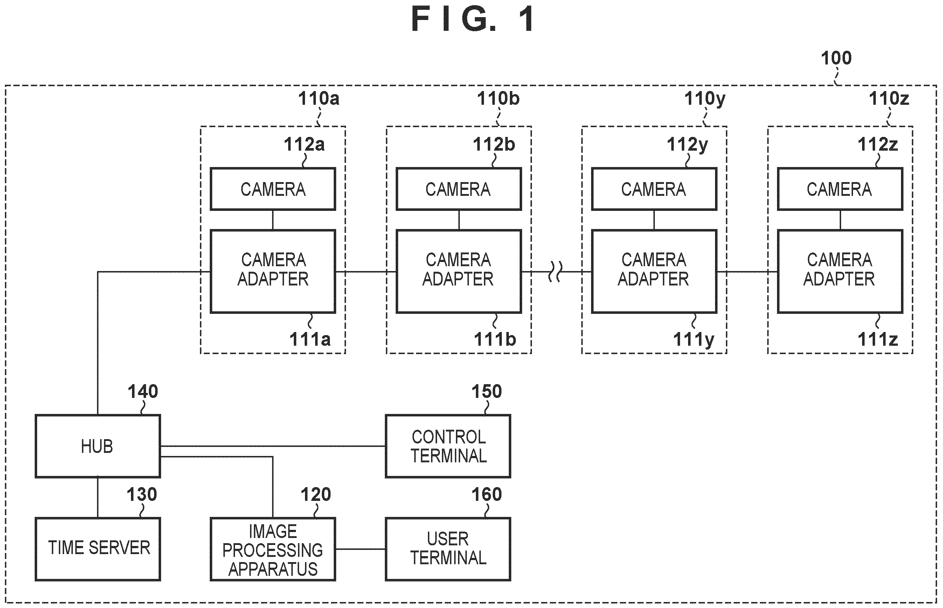

Fig. 1 shows an example of the configuration of an image processing system 100 according to this embodiment. The image processing system 100 is configured to include, for example, sensor systems 110a to 110z, an image processing apparatus 120, a time server 130, a hub 140, a control terminal 150, and a user terminal 160. The control terminal 150 executes control of function units forming the image processing system 100. For example, the control terminal 150 performs management of the operation states of the sensor systems 110a to 110z, the image processing apparatus 120, and control of parameter settings from a remote site via a network. Note that the control terminal 150 can be connected to the hub 140 to communicate signals for setting and controlling the function units of the image processing system 100. For communication between the control terminal 150 and other function units via the hub 140, Gigabit Ethernet (GbE) complying with the IEEE802.3 standard formulated for Ethernet (registered trademark, to be omitted below), or 10 GbE or 100 GbE can be used. The present invention is not limited to these, and Interconnect Infiniband, an industrial Ethernet, or a network of another type may be used, or these may be used in combination. The hub 140 transfers a packet including an image or a control signal to be exchanged between the function units forming the image processing system 100.

The sensor systems 110a to 110z each generate an image by image capturing using a camera. In this embodiment, a term "image" can include both "moving image" and "still image" unless otherwise specified. That is, the image processing system 100 according to this embodiment can process both a still image and a moving image. In this embodiment, the sensor systems 110a to 110z will sometimes be referred to as a sensor system 110 without distinction. Similarly, camera adapters 111a to 111z and cameras 112a to 112z included in the sensor systems 110a to 110z will sometimes be referred to as a camera adapter 111 and a camera 112 without distinction. Fig. 1 shows an example in which 26 sets of sensor systems, that is, the sensor systems 110a to 110z are included in the image processing system 100. The image processing system 100 may include sensor systems 110 in number less than 26 sets or more than 26 sets. The configurations of the sensor systems 110 may be identical or different. For example, a constituent element included in the configuration of some sensor systems 110 may not be included in the remaining sensor systems 110. The sensor system 110 may include a plurality of cameras 112. The camera adapter 111 and the camera 112 can be connected using one or more signal lines. For example, a signal line used to control the camera 112 and a signal line used to transmit data captured by the camera 112 may be different. The cameras 112 in the sensor systems 110 can be used to capture the same object from a plurality of directions. The performance or product model may be different between the cameras 112. Also, the sensor systems 110a to 110z can be connected in series by daisy chain. Since this connection form can decrease the number of connection cables or save labor in the wiring work, system construction can be simplified when increasing the capacity of image data in association with an increase of the image resolution or frame rate (4K or 8K). Note that not all the sensor systems 110 included in the image processing system 100 need to be connected by daisy chain. For example, the sensor systems 110 included in the image processing system 100 may be divided into a plurality of groups and connected by daisy chain on a group basis. For example, in a building formed by a plurality of floors, like a stadium, the sensor systems 110 can be divided into groups on a floor basis and connected by daisy chain. In each floor, the group may further be divided in a unit of, for example, the half the circumference of the stadium. For example, in a case where a plurality of image processing apparatuses 120 are arranged, the sensor systems 110 connected to each image processing apparatus 120 may be put into a group. When the sensor systems 110 are divided into groups, the system construction can be simplified even in a place difficult to do wiring, and the system can flexibly be constructed.

The sensor system 110 is configured to include the camera adapter 111 and the camera 112. Note that the sensor system 110 may include other constituent elements, and can include, for example, an audio device such as a microphone and a camera platform configured to control the direction of the camera. Also, the sensor system 110 can include one or more camera adapters 111 and one or more cameras 112. The camera adapter 111 and the camera 112 may be formed integrally or may be formed separately. Some of the functions of the camera adapter 111 may be imparted to the image processing apparatus 120. An image captured in the sensor system 110 on the upstream side of the daisy chain is transferred to the image processing apparatus 120 via the sensor system 110 on the downstream side of the daisy chain. The sensor system 110 on the upstream side of the daisy chain is the sensor system 110 arranged at a position relatively far when viewed from the image processing apparatus 120 and is, for example, the sensor system 110z. The sensor system 110 on the downstream side of the daisy chain is the sensor system 110 arranged at a position relatively close when viewed from the image processing apparatus 120 and is, for example, the sensor system 110a. For example, an image captured by the camera 112z is subjected to an image process in the camera adapter 111z, packetized, and transferred to the camera adapter 111y via the daisy chain. The camera adapter 111y transfers the packet received from the sensor system 110z and a packet obtained by performing an image process for an image captured by the camera 112y and packetizing to the sensor system 110 on the downstream side. Finally, images captured by the cameras 112a to 112z are transferred to the image processing apparatus 120 via the sensor system 110a and the hub 140. In this embodiment, the daisy chain is one of communication lines that connect the camera adapters 111.

The image processing apparatus 120 reconstructs an image using the packets acquired from the sensor systems 110. The image processing apparatus 120 extracts, for example, the identifier of the camera adapter 111, the type of the image, the frame number, from the header of the packet and reconstructs an image using these. Note that the image processing apparatus 120 includes a storage device configured to accumulate an acquired image and can store image data extracted from the packet and information obtained from the header in linkage with each other. The image processing apparatus 120 can read out a corresponding image from the stored images based on information for specifying a viewpoint, which is designated from the user terminal 160 or the control terminal 150, perform rendering processing, and generate a virtual viewpoint image. Note that some of the functions of the image processing apparatus 120 may be imparted to the control terminal 150, the user terminal 160, or the camera adapter 111. The virtual viewpoint image generated by the rendering processing can be transmitted to the user terminal 160 and displayed on the user terminal 160. The image processing system 100 can thus provide the image of a viewpoint based on the designation of the user who operates the user terminal 160. That is, the image processing apparatus 120 can select an image associated with a viewpoint designated by the user terminal 160 or the like from the images captured by the plurality of cameras 112 and generate a virtual viewpoint image using these images. Note that the virtual viewpoint image may be generated by a function unit (for example, the control terminal 150 or the user terminal 160) other than the image processing apparatus 120. In this case, the image processing apparatus 120 can provide the image associated with the designated viewpoint to the function unit.

The time server 130 provides time information to each sensor system 110. For example, the time server 130 can distribute a communication packet (synchronization packet) including time information for performing time synchronization to each sensor system 110. The sensor system 110 can perform synchronization between the plurality of cameras 112 based on the time information included in the synchronization packet. Synchronizing the plurality of cameras 112 will sometimes be referred to as Genlock. When the camera 112 synchronize, image data output from the cameras 112 can cooperatively be used. For example, images captured at the same time can be selected from images captured by the different cameras 112 and accumulated in the image processing apparatus 120. Synchronization between the cameras 112 can be executed by the Transparent Clock function and the Ordinary Clock function of Precision Time Protocol (PTP) provided in the camera adapter 111. The Transparent Clock function is a function of measuring time taken to transfer a PTP packet (synchronization packet) passing through the apparatus, writing the time in the header of the PTP packet, and transferring it. The Ordinary Clock function is a function for an apparatus having a single network connection. That is, to synchronize the plurality of cameras 112 in the plurality of sensor systems 110 connected by daisy chain, the camera adapter 111 calculates the retention time of the synchronization packet in the self-apparatus and writes the time in the header of the packet. The camera adapter 111 then transfers the synchronization packet to the next camera adapter 111. Thus, each camera adapter 111 can synchronize with the time server 130 at high accuracy based on the received synchronization packet. When the camera adapter 111 synchronizes with the time server 130, the image capturing timing of each camera 112 can be synchronized. For example, the camera adapter 111 can control the image capturing timing of the camera 112 based on the time of synchronization with the time server 130. Also, the camera adapter 111 can generate, based on the time of synchronization with the time server 130, time information to be added to the image captured by the camera 112. Note that, to increase the reliability of the time server 130, a redundant configuration using a plurality of time servers 130 may be formed. If a failure occurs in the time server 130, the image capturing timings of the cameras 112 do not synchronize, and a virtual viewpoint image cannot be generated. In this case, times of the plurality of time servers 130 may be synchronized using a Global Positioning System (GPS), or the like.

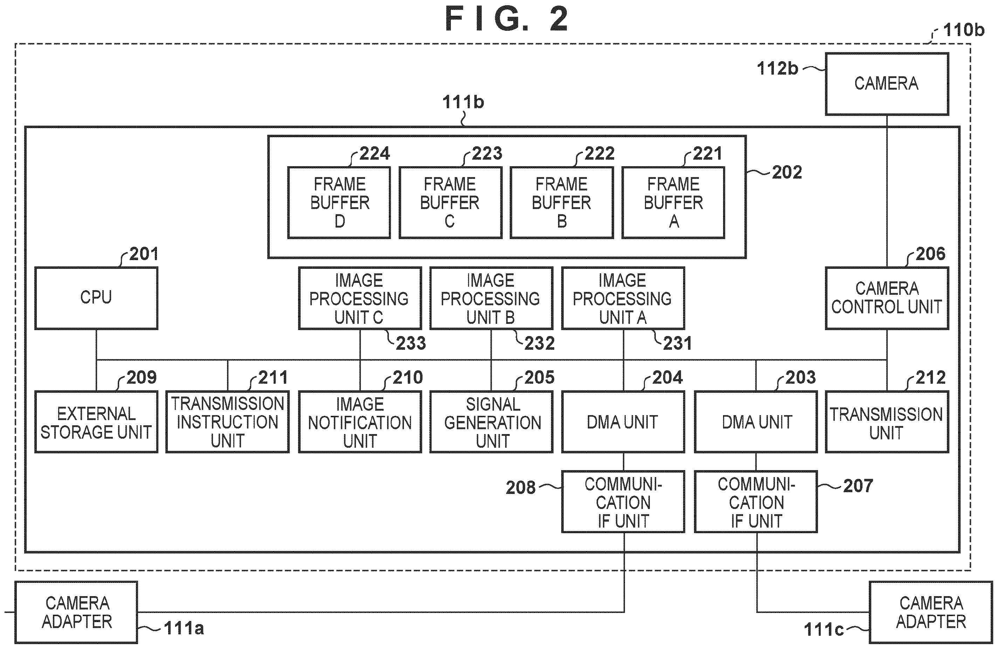

The camera adapter 111 generates image data to be used to create a virtual viewpoint content or the like using the image captured by the camera 112. Fig. 2 shows an example of the configuration of the camera adapter 111. In this embodiment, a description will be made using the camera adapter 111b as an example, but the remaining camera adapters 111 can have the same configuration. The camera adapter 111 can include a CPU 201, an internal storage unit 202, a DMA unit 203, a DMA unit 204, a signal generation unit 205, a camera control unit 206, a communication interface (IF) unit 207, a communication IF unit 208, and an external storage unit 209. Also, the camera adapter 111 is configured to include an image notification unit 210, a transmission instruction unit 211, a transmission unit 212, an image processing unit A 231, an image processing unit B 232, and an image processing unit C 233. Note that in this embodiment, the image processing unit A 231, the image processing unit B 232, and the image processing unit C 233 will sometimes be referred to as an image processing unit 230 without distinction. The internal storage unit 202 can include a frame buffer A 221 to a frame buffer D 224. Note that in this embodiment, the frame buffer A 221 to the frame buffer D 224 will sometimes be referred to as a frame buffer 220 without distinction. Fig. 2 shows an example in which three image processing units and four frame buffers are used. However, the number of image processing units and the number of frame buffers may be smaller than these or larger than these. The function units constituting the camera adapter 111 are connected to a system bus and can communicate with each other. Also, each function unit includes a register, and can execute various kinds of processing in accordance with the set value of the register and display the processing state or processing result of itself on the register. Each function unit can know the state of the function unit based on the display of the register of another function unit.

The CPU 201 controls the entire camera adapter 111. Also, the CPU 201 performs time synchronization based on exchange of a synchronization packet with the time server 130. The CPU 201 also exchanges a control packet with the control terminal 150. Furthermore, the CPU 201 can accept a designation of image data to be processed from the user terminal 160 or the image processing apparatus 120. Also, the CPU 201 can control pipeline processing formed by the image processing unit A 231 to the image processing unit C 233.

The internal storage unit 202 is a memory that holds programs executed by the CPU 201 to control the camera adapter 111 and the like and the synchronization packet and the control packet that the CPU 201 transmits/receives to/from another apparatus. Also, the internal storage unit 202 stores captured image data that the camera control unit 206 acquires from the camera 112b. Image data to be input to the image processing units 230 and image data output from the image processing units 230 are stored in the frame buffer A 221 to the frame buffer D 224 provided in the internal storage unit 202. Fig. 2 shows one storage area for each frame buffer 220, but the frame buffer 220 can have a storage area capable of independently storing a plurality of image data. For example, the frame buffer 220 may divisionally use one storage area in accordance with an application purpose, or may have a plurality of memories for storing a plurality of image data. The types of the memories may be different. Note that the frame buffer A 221 is a buffer to which image data to be subjected to a series of image processes is input first and can therefore be called an input buffer. Also, the frame buffer D 224 is a buffer to which image data that has undergone the series of image processes is output and can therefore be called an output buffer.

The DMA unit 203 and the DMA unit 204 execute Direct Memory Access (DMA) for transmitting/receiving a packet to/from another camera adapter. For example, the DMA unit 203 and the DMA unit 204 transmit/receive a packet based on an instruction from the CPU 201 or the transmission unit 212. A transfer instruction for a packet of image data can be done by the transmission unit 212. A transfer instruction for a synchronization packet can be done by the CPU 201. As an example, the DMA unit 203 transmits/receives a packet to/from the camera adapter 111c via the communication IF unit 207. The DMA unit 203 reads out the packet from a designated area (for example, the internal storage unit 202) and transfers it to the communication IF unit 207. In addition, the DMA unit 204 transfers, to a designated area (for example, the internal storage unit 202), a packet received from the camera adapter 111a.

The communication IF unit 207 and the communication IF unit 208 transmit/receive communication packets (a synchronization packet, a TCP/IP packet, a packet of image data, and the like) that are exchanged between the camera adapter 111 and other function units. For example, the communication IF unit 207 and the communication IF unit 208 can execute the processes of the first and second layers of an Open Systems Interconnection (OSI) reference model. The communication IF unit 207 inputs, to the DMA unit 204, a PTP packet (synchronization packet) received from the time server 130 via the camera adapter 111a. The PTP packet input to the DMA unit 204 is transferred to the internal storage unit 202 based on the transfer instruction by the CPU 201, subjected to protocol processing by the CPU 201, and input to the DMA unit 203. The communication IF unit 207 transfers the PTP packet input to the DMA unit 203 to the camera adapter 111c. On the other hand, the communication IF unit 208 inputs, to the DMA unit 203, a PTP packet received from each of the camera adapters 111c to 111z. The PTP packet input to the DMA unit 203 is transferred to the internal storage unit 202 based on a transfer instruction by an instruction of the CPU 201, subjected to protocol processing by the CPU 201, and input to the DMA unit 204. The communication IF unit 208 transfers the PTP packet input to the DMA unit 204 to the time server 130 via the camera adapter 111a. Note that a PTP packet generated by the CPU 201 is also input to the DMA unit 204. The communication IF unit 208 transfers the PTP packet to the time server 130 via the camera adapter 111a. The communication IF unit 208 similarly acquires a packet of image data generated by the transmission unit 212 from the DMA unit 204 and transfers it to the camera adapter 111a. Note that the communication IF unit 207 and the communication IF unit 208 can each hold the time of a timepiece provided in a self-function when transmitting/receiving the PTP packet (time stamp function). The time stamp function can be used by the CPU 201 to calculate time synchronization. By the time stamp function, the CPU 201 can correctly calculate the transmission/reception time of the PTP packet and the retention time in the camera adapter 111. The time difference between the time server 130 and the camera adapter 111 calculated by the protocol processing of PTP by the CPU 201 can be used to correct the timepieces of both the communication IF unit 207 and the communication IF unit 208. Note that before the start of time synchronization, time synchronization may be performed between the timepieces of the communication IF unit 207 and the communication IF unit 208.

The signal generation unit 205 generates a control signal for causing the function units to operate in synchronism. For example, the signal generation unit 205 can generate a control signal based on the timepiece maintained by the communication IF unit 208. Also, the signal generation unit 205 displays the number of generated control signals (pulse generation count) on the register, thereby causing the CPU 201 to acquire the pulse generation count. In addition, the signal generation unit 205 makes it possible to control initialization of the pulse generation count via the register. The operation procedure of the signal generation unit 205 will be described later.

The camera control unit 206 controls the camera 112b. For example, the camera control unit 206 outputs a Genlock signal for the camera 112b to perform Genlock or Timecode for adding time information to the image captured by the camera 112b to the camera 112b. The Genlock signal and Timecode can be generated based on a reference signal generated by the signal generation unit 205. Note that the camera control unit 206 can be controlled by the CPU 201 that has received an instruction from the control terminal 150. The camera control unit 206 can receive captured image data (RAW format image data) which is captured by the camera 112b in synchronism with the Genlock signal and to which Timecode is added, and transfer it to the internal storage unit 202 or the external storage unit 209. For example, the captured image data may be transferred to the frame buffer A 221 of the internal storage unit 202 and subjected to pipeline processing. In this embodiment, a description will be made using captured image data accumulated in the external storage unit 209, and a detailed description of a method of performing pipeline processing using captured image data received from the camera 112b and transmitting it will be omitted.

The image processing unit A 231, for example, reads out RAW format image data stored in the frame buffer A 221, converts it into a BAYER format image, and writes it in the frame buffer B 222. Note that when reset of the image processing unit B 232 is released, the pointer of an address for reading out image data from the frame buffer A 221 and the pointer of an address for writing image data in the frame buffer B 222 are initialized. These pointers of the addresses can be recognized by other function blocks via the register.

The image processing unit B 232 reads out the BAYER format image stored in the frame buffer B 222, performs vibration control processing, and writes the image in the frame buffer C 223. Note that the vibration control processing is processing of correcting an image blur caused by a camera shake in image capturing. The pointer of an address for reading out image data from the frame buffer B 222 and the pointer of an address for writing image data in the frame buffer C 223 can automatically be calculated based on the pointers of the addresses in the processing of the image processing unit A 231. For example, the pointer of the address for reading out image data from the frame buffer B 222 can be equivalent to the address used by the image processing unit A 231 to write. These pointers of the addresses can be recognized by other function blocks via the register.

The image processing unit C 233 reads out the image data after the vibration control processing from the frame buffer C 223, and separates it into a foreground region and a background region. The foreground region can be a moving body such as a person, and the background region can be a region other than the foreground region. The image processing unit C 233 can write only the image (foreground image) of the foreground region in the frame buffer D 224. Note that the image processing unit C 233 may write the image (background image) of the background region in the frame buffer D 224. The pointer of an address for reading out image data from the frame buffer C 223 and the pointer of an address for writing image data in the frame buffer D 224 can automatically be calculated based on the pointers of the addresses in the processing of the image processing unit B 232. For example, the pointer of the address for reading out image data from the frame buffer C 223 can be equivalent to the address used by the image processing unit B 232 to write. These pointers of the addresses can be recognized by other function blocks via the register.

The image processes executed by the above-described image processing units 230 are merely an example, and the image processing units 230 can execute processes different from above. Image data that has undergone an image process can be called processed data. An example in which the processing result of each image processing unit 230 is transferred to the next image processing unit 230 using the frame buffer 220 has been described above. This technique can be applied to arbitrary processing in the plurality of image processes executed for the image data.

The image notification unit 210 notifies the transmission instruction unit 211 of information that specifies image data to be transmitted. For example, upon detecting that the image processing unit C 233 stores the foreground image (or the background image) in the frame buffer D 224, the image notification unit 210 can notify the transmission instruction unit 211 of the size (data length) of the image and the address at which the image is stored. The pointer of the address at which the image data to be detected by the image notification unit 210 is stored can automatically be calculated based on the pointer of the address in the processing of the image processing unit C 233. For example, the pointer of the address for reading out image data from the frame buffer D 224 can be equivalent to the address used by the image processing unit C 233 to write.

The transmission instruction unit 211 instructs the transmission unit 212 to transmit the image data based on the information notified from the image notification unit 210. For example, the transmission instruction unit 211 can specify the image data based on the pointer of the address at which the image data notified from the image notification unit 210 is stored and the image size. In addition, the transmission instruction unit 211 can perform the notification to the transmission unit 212 based on the control signal input from the signal generation unit 205.

The transmission unit 212 packetizes the image data based on the instruction from the transmission instruction unit 211, and outputs it to the communication line. For example, the transmission unit 212 acquires the image data instructed by the transmission instruction unit 211, performs packetization, and stores it in an area that the DMA unit 203 or the DMA unit 204 can access. The packetized image data can be called an image packet. The image packet can be stored in the internal storage unit 202 or the external storage unit 209. Note that the image packet may be stored in the transmission unit 212. For example, the transmission unit 212 can receive the image packet, via the DMA unit 203, from another camera adapter 111 on the upstream side, and transfer the received image packet to the camera adapter 111 on the downstream side based on an instruction to the DMA unit 204.

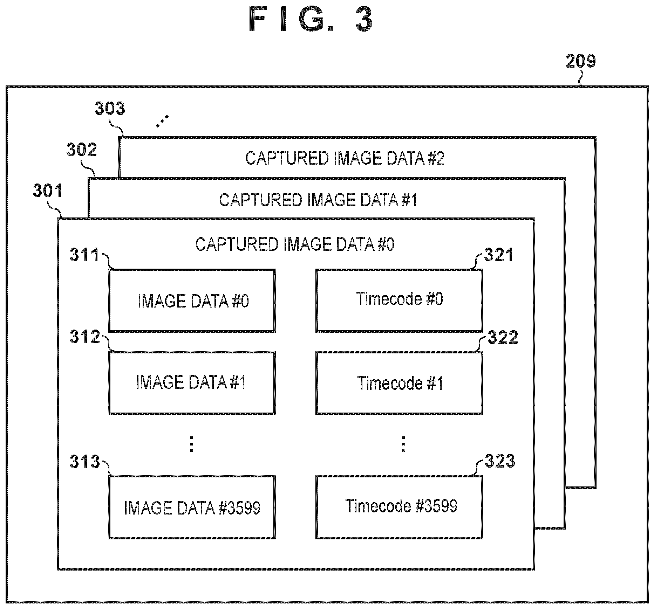

The external storage unit 209 is a storage device in which an enormous amount of image data captured by the camera 112b is accumulated. For example, the external storage unit 209 can be a Solid State Drive (SSD) or a Hard Disk Drive (HDD). The external storage unit 209 can manage the image data as captured image data organized for each image capturing of the camera. Fig. 3 shows an example of the data configuration of image data captured by the camera 112b. For example, image data 311 to 313 are image data generated by performing image capturing for 1 min using 60 Frame Per Sec (FPS) settings. Captured image data 301 can be formed by 60 FPS × 60 sec = 3,600 image data 311 to 313 and Timecodes 321 to 323 associated with the image data. The Timecodes 321 to 323 indicate, for example, times at which the image data 311 to 313 associated with these were captured. The image data 311 to 313 will sometimes be referred to as image data 310 without distinction. The Timecodes 321 to 323 will sometimes be referred to as Timecode 320 without distinction. The captured image data 301 to 303 will sometimes be referred to as captured image data 300 without distinction. A sequence number used to discriminate each captured image data can be added to each captured image data. To designate the first image and the final image as the target of pipeline processing, the CPU 201 can designate the sequence number and the Timecode of captured image data corresponding to each image. For example, the CPU 201 can designate the first image as the target of pipeline processing using a format of Timecode = 10:29:30.0 of sequence number #3, and the final image using a format of Timecode = 10:30:29.59 of sequence number #3. For example, Timecode = 10:29:30.0 can indicate the first frame at 10:29:30, and Timecode = 10:30:29.59 can indicate the 60th frame at 10:30:29. A plurality of image data from the first Timecode to the final Timecode designated by the CPU 201 can be called an image data set. While incrementing Timecode one by one from the designated first image data to the final image data, the CPU 201 controls the operation of each function block such that pipeline processing of the image data is executed. Note that the CPU 201 can designate only the first image data as the target of pipeline processing. In this case, as the pipeline processing, image processes can be executed while sequentially calling out image data from the first image data. If another image data set is designated by the user or the like halfway through the pipeline processing, image data included in the other designated image data set can be the target of the pipeline processing. In this case, a series of image data as the target of pipeline processing before the designation of the other image data can be called a first image data set, and a series of image data starting from the other image data can be called a second image data set.

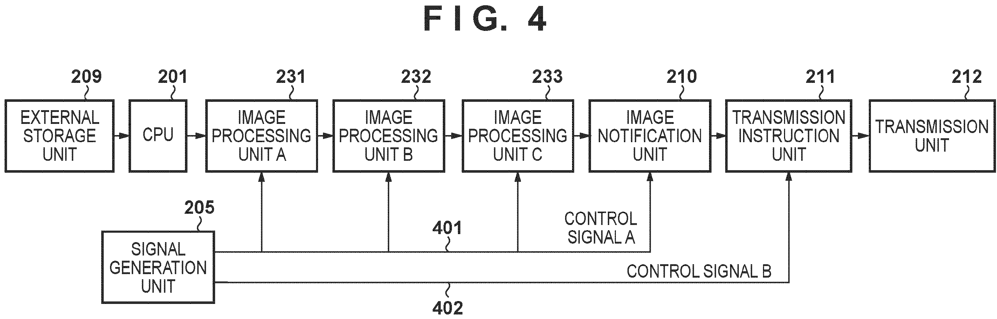

Pipeline processing including a plurality of image processes according to this embodiment will be described. Fig. 4 shows an example of function units constituting pipeline processing. In Fig. 4, a description will be made using an example in which an image data set accumulated in the external storage unit 209 is read out by the CPU 201, pipeline processing is executed, and the transmission unit 212 outputs the image data. Pipeline processing is executed based on a control signal A 401 generated by the signal generation unit 205. The control signal A 401 is notified to the image processing unit A 231 to the image processing unit C 233 and the image notification unit 210. Note that the CPU 201 performs polling of the pulse generation count of the control signal A 401 displayed on the register of the signal generation unit 205, thereby determining whether a pulse of the control signal A 401 is generated and starting processing. Note that the control signal A 401 may be notified to the CPU 201, and the CPU 201 may start processing based on the notification. These function units each detect the timing of the rising edge of the input control signal A 401 and start processing. The CPU 201 specifies the image data set that is the target of pipeline processing based on a designation from the user terminal 160 or the like, and reads out the first image data 310 of the image data set from the external storage unit 209. The CPU 201 stores the readout image data 310 in the frame buffer A 221. Also, the CPU 201 sequentially stores the image data 310 in the frame buffer A 221 in accordance with the period of pipeline processing. The image processing unit A 231 reads out the image data stored by the CPU 201 from the frame buffer A 221, performs an image process, and stores the image data in the frame buffer B 222. The image processing unit B 232 reads out the image data stored by the image processing unit A 231 from the frame buffer B 222, performs an image process, and stores the image data in the frame buffer C 223. The image processing unit C 233 reads out the image data stored by the image processing unit B 232 from the frame buffer C 223, performs an image process, and stores the image data in the frame buffer D 224. The image notification unit 210 reads out, from the frame buffer D 224, the address of the image data stored by the image processing unit C 233 and the data length of the image data, and notifies the transmission instruction unit 211 of these. The processes to this point are executed as a pipeline operation based on the control signal A 401. The transmission instruction unit 211 notifies the transmission unit 212 of the address and the data length of the image data notified from the image notification unit 210 based on a control signal B 402 generated by the signal generation unit 205. The transmission unit 212 acquires the image data from the frame buffer D 224 based on the address and the data length notified by the transmission instruction unit 211. The transmission unit 212 generates an image packet by packetizing the acquired image data and outputs it to the communication line by controlling the DMA unit 203 or the DMA unit 204. Note that Fig. 4 is an example of a view showing a configuration for executing pipeline processing, and the configuration for performing the image processes is not limited to this. For example, a plurality of function units may be integrated to form one function unit, or some functions may be omitted.

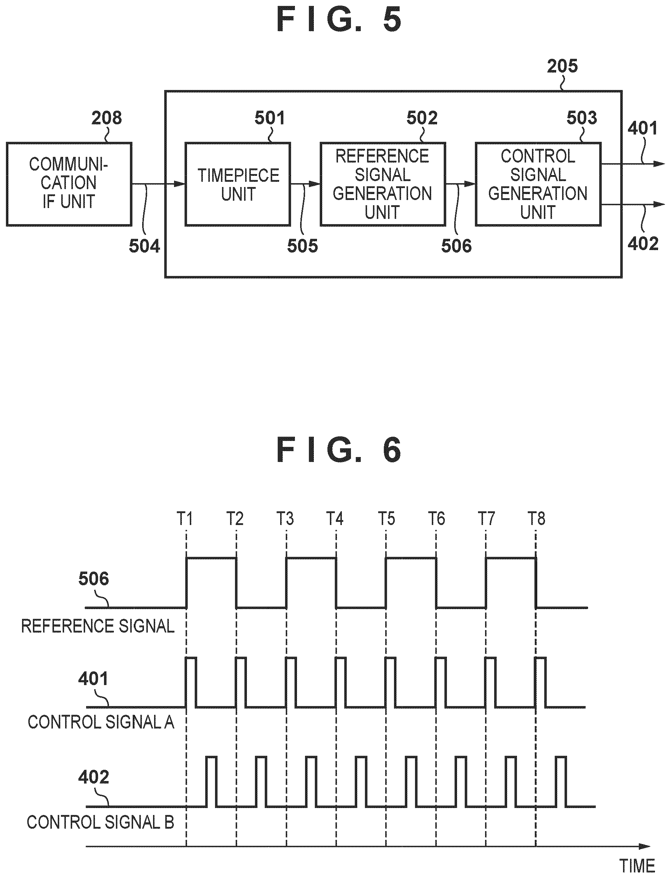

The relationship between the control signal A 401 and the control signal B 402 will be described with reference to Figs. 5 and 6. Fig. 5 shows an example of the functional configuration of the signal generation unit 205. The signal generation unit 205 is configured to include a timepiece unit 501, a reference signal generation unit 502, and a control signal generation unit 503. The timepiece unit 501 maintains time information. For example, the timepiece unit 501 acquires time information A 504 from the communication IF unit 208 and adjusts the internal timepiece. For example, the timepiece unit 501 synchronizes the internal timepiece to the time information A 504. The timepiece unit 501 generates time information B 505 based on the internal timepiece and outputs it to the reference signal generation unit 502. The reference signal generation unit 502 generates a reference signal 506 of a predetermined period using the time information B 505, and outputs it to the control signal generation unit 503. The predetermined period can be, for example, 1 Hz or 30 Hz. The control signal generation unit 503 generates the control signal A 401 and the control signal B 402 using the received reference signal 506.

Fig. 6 is an example of a view showing the relationship between the reference signal 506, the control signal A 401, and the control signal B 402. The reference signal 506 is a rectangular signal having a predetermined period. The control signal A 401 is a pulse signal generated at the timing of the rising edge and the timing of the falling edge of the reference signal 506. The control signal B 402 is a pulse signal delayed by a predetermined time from the control signal A 401. That is, the control signal B 402 is delayed by a predetermined time from the control signal A 401 serving as the reference of pipeline processing and then output to the transmission instruction unit 211. Hence, after the image data that has undergone the image processes in the pipeline processing is stored in the frame buffer D 224, the transmission unit 212 acquires the image data from the frame buffer D 224. For example, the output of the control signal B 402 can be set such that it is output after processing of the image notification unit 210 determining the presence/absence of image data in the frame buffer D 224 and notifying the transmission instruction unit 211 of the address and the data length of the image data is completed. Hence, as for the predetermined time from output of the control signal A 401 to output of the control signal B 402, determination of the presence/absence of image data by the image notification unit 210 and measurement of time needed for the notification to the transmission instruction unit 211 are performed at the time of system construction, and a value larger than the measurement result can be set. Each of the control signal A 401 and the control signal B 402 is a pulse signal generated at a period 1/2 the period of the reference signal 506. For example, if the frequency of the reference signal 506 is 30 Hz, the frequency of the control signal A 401 and the control signal B 402 is 60 Hz. Thus, pipeline processing at a processing speed of 60 FPS can be executed using the reference signal 506 of 30 Hz. The processing speed of the pipeline can arbitrarily be changed by changing the period of the reference signal 506 or using a frequency division signal of the reference signal 506. In this embodiment, assume that the control signal A 401 and the control signal B 402 are output at a period of 60 Hz, 59.94 Hz, 50 Hz, 30 Hz, 29.97 Hz, or 25 Hz, which is a representative frequency as an image frame rate of a camera, or at a period of 1 Hz or 2 Hz. These periods are notified from the CPU 201 to the signal generation unit 205 at the generation start timings of the control signal A 401 and the control signal B 402.

As described above, the CPU 201 sequentially stores the image data 310 designated by the user in the frame buffer A 221, and controls pipeline processing based on the control signal A 401 generated by the signal generation unit 205 and output of the image packet based on the control signal B 402. On the other hand, for example, if the pipeline processing is interrupted halfway by a stop instruction from the user, the processed image data 310 remain in the frame buffer A 221 to the frame buffer D 224. After that, even if another image data set is designated at the time of a start instruction from the user, the image data 310 are sequentially sent to the communication line when the next pipeline processing is started. For this reason, the image data 310 that need not be transmitted use the resource of the communication line, and images that the user does not want may be displayed. Note that when the CPU 201 flushes the image data stored in the frame buffer A 221 to the frame buffer D 224 at the timing of stopping the control signal, an influence of the remaining image data 310 can be avoided. However, if it is impossible to discriminate whether the interruption of processing is caused by temporary stop or complete stop, even the image data 310 that should originally be output at the time of resumption after the temporary stop is deleted. In addition, if the whole system needs to be reset to erase the image data 310, recovery from the system reset takes time each time.

Considering such a situation, in this embodiment, transmission prevention processing for unnecessary images is executed, thereby preventing the past processed image data 310 stored in the frame buffer from being output to the communication line. For example, assume that in a case where a stop instruction is received from the user during execution of pipeline processing of a first image data set, and a start instruction is then received from the user, the target of pipeline processing is a new second image data set. That is, assume that a switching instruction is done to switch the target of pipeline processing from the first image data set to the second image data set. In this case, the CPU 201 instructs to mask (i.e. to not output) the control signal B 402 a predetermined number of times such that the processed first image data set is not output from the transmission unit 212. Since the control signal B 402 is not output, the transmission instruction unit 211 is not notified of an output instruction. Hence, the transmission unit 212 does not read out the image data. This can avoid output of unnecessary image data. Here, if image processes are executed by pipeline processing based on a common timing signal, the CPU 201 can specify a predetermined period (latency) needed for the pipeline processing and specify the number of times (mask count) to mask the control signal B 402 based on this. When the CPU 201 stores the first image data 310 of the image data set in the frame buffer A 221, and time corresponding to the latency needed for the pipeline processing elapses, the image data that has undergone the image processes is stored in the frame buffer D 224. For example, the CPU 201 specifies the mask count based on the number of function units included in the pipeline processing and notifies the control signal generation unit 503 of it. In this case, the number of image processes included in the pipeline processing can be used as the mask count. Note that specifying the predetermined period needed for the pipeline processing by the CPU 201 can include specifying the number of events that occur at a predetermined period, such as specifying the number of control signals output to execute the pipeline processing. An example of a hardware configuration that can implement this embodiment and the operation procedure of the function units of the camera adapter 111 shown in Fig. 2 will be described below.

### (Hardware Configuration)

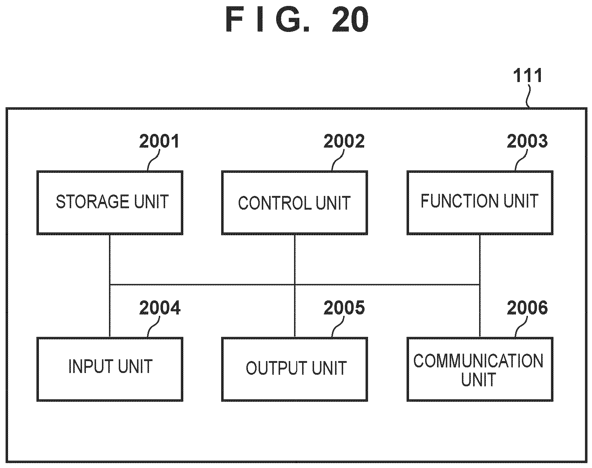

Fig. 20 shows an example of the hardware configuration of the camera adapter 111 according to this embodiment. As an example of the hardware configuration, the camera adapter 111 includes, for example, a storage unit 2001, a control unit 2002, a function unit 2003, an input unit 2004, an output unit 2005, and a communication unit 2006. The storage unit 2001 is formed by one or more memories including a ROM and a RAM, and may store various kinds of information such as control programs used by the function units constituting the camera adapter 111 to perform various kinds of operations and parameters for the operation of the camera adapter 111. ROM and RAM are shorts for Read Only Memory and Random Access Memory, respectively. The storage unit 2001 may be configured to include not only the memories such as a RAM and a ROM but also a storage medium such as a flexible disk, a hard disk, an optical disk, a magnetooptical disk, a CD-ROM, a CD-R, a magnetic tape, a nonvolatile memory card, or a DVD. For example, the external storage unit 209 or the internal storage unit 202 is implemented by the storage unit 2001. The control unit 2002 is formed by, for example, one or more processors including a CPU and an MPU and executes the control programs stored in the storage unit 2001, thereby controlling the whole device of the camera adapter 111. Note that the control unit 2002 may control the whole device of the camera adapter 111 by cooperation of the control programs stored in the storage unit 2001 and an operating system (OS). Note that CPU and MPU are shorts for Central Processing Unit and Micro Processing Unit, respectively. If the control unit 2002 includes a plurality of processors that can be implemented by a multicore or the like, the whole device of the camera adapter 111 may be controlled by the plurality of processors. For example, the CPU 201 can be implemented by the control unit 2002. The function unit 2003 is, for example, hardware used by the camera adapter 111 to execute processing necessary for the operation of each function unit such as an image process.

The input unit 2004 accepts various kinds of operations from the user. The output unit 2005 performs various kinds of outputs to the user via a monitor screen or a speaker. Here, the output by the output unit 2005 may be display on a monitor screen, sound output by a speaker, or a vibration output. Note that both the input unit 2004 and the output unit 2005 may be implemented as one module, like a touch panel display. Also, the input unit 2004 and the output unit 2005 may each be a device integrated with the camera adapter 111 or may be a separate device. The communication unit 2006 is Gigabit Ethernet (GbE) complying with the IEEE802.3 standard formulated for Ethernet (registered trademark, to be omitted below), or 10 GbE or 100 GbE. The present invention is not limited to these, and Interconnect Infiniband, an industrial Ethernet, or a network of another type may be used, or these may be used in combination. For example, the communication IF unit 207 or the communication IF unit 208 can be implemented by the communication unit 2006.

### (Operation Procedures)

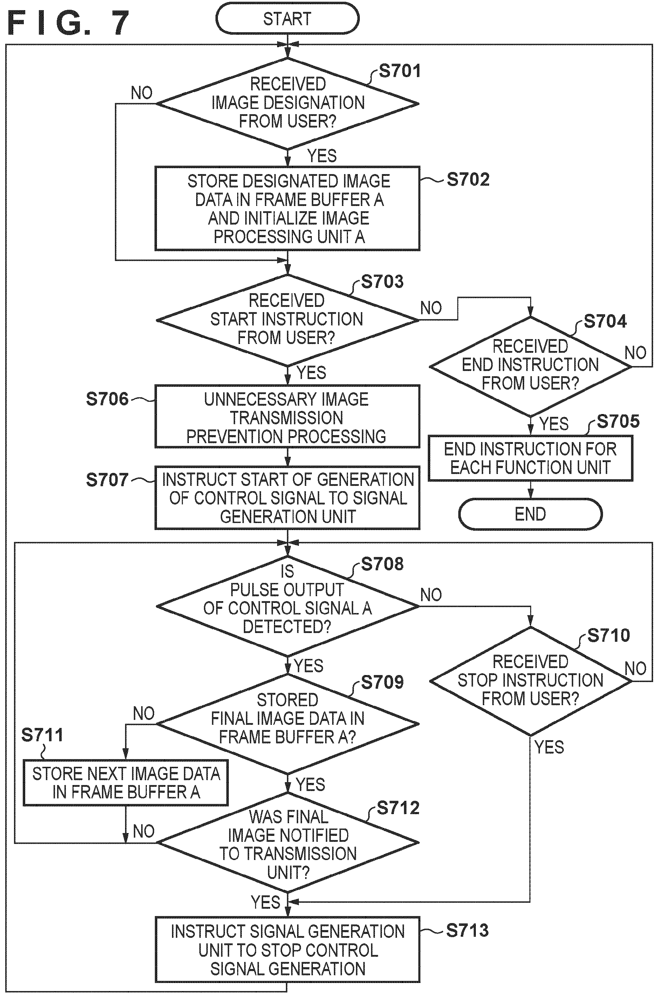

The operation procedure of each function unit will be described. Fig. 7 shows an example of an operation procedure when the CPU 201 controls pipeline processing. This procedure is started when the camera adapter 111 is powered on, and the CPU 201 is activated. The CPU 201 first releases reset of the function units, and executes initial settings of the function units and initialization of the registers, and the like. For example, in the initialization by the CPU 201, setting of the image processing parameters of the image processing unit A 231, the image processing unit B 232, and the image processing unit C 233 and designation of storage destination for the captured image data of the camera 112 by the camera control unit 206 can be performed. As an example, in the first state after the release of reset, the camera control unit 206 can operate to store captured image data in the frame buffer A 221. In this embodiment, the camera control unit 206 does settings to write captured image data in an area that is other than the frame buffer A 221 and is not used by the remaining frame buffers.
Note that these settings should be executed before the CPU 201 stores image data in the frame buffer A 221. Also, the CPU 201 executes time synchronization with the time server 130. For example, the CPU 201 performs time synchronization using PTP and maintains synchronization with the time server 130 using PTP even after that. After that, the CPU 201 waits for input from the user.

First, the CPU 201 determines whether a designation of an image to be processed is received from the user (step S701). For example, the user can designate a predetermined image from the image data 310 stored in the external storage unit 209. The predetermined image can be designated by the Timecode 320 associated with each of the image data 310 to start pipeline processing and the image data 310 to end pipeline processing and the sequence number of the captured image data 300 including these. Upon receiving a designation of an image from the user (YES in step S701), the CPU 201 stores the designated image data 310 in the frame buffer A 221, initialize the image processing unit A 231, and waits for an instruction to start pipeline processing from the user (step S702). Note that the CPU 201 can store a plurality of image data 310 in the frame buffer A 221. For example, if the number of buffer planes of the frame buffer A 221 is N, the CPU 201 can store N image data 310 in the frame buffer A 221 at maximum. When the image processing unit A 231 is initialized, the image processing unit A 231 can read out the image data 310 sequentially from the initial address. Hence, the CPU 201 can store the plurality of image data 310 sequentially from the first buffer plane of the frame buffer A 221 in accordance with the order to read out. For example, assume that the image data 310 designated by the user has a sequence number "5" of captured image data and Timecodes from 9:50:30.0 to 9:51:30.0, and the number of buffer planes of the frame buffer A 221 is 16. In this case, the CPU 201 first stores, in the first buffer plane of the frame buffer A 221, the image data 310 for which the sequence number of the captured image data is 5 and the Timecode is 9:50:30.0. The CPU 201 then stores the image data 310 of 9:50:30.1 in the next buffer plane, and repeats this, thereby storing 16 image data in the frame buffer A 221 at maximum. If no image designation is received from the user, and neither the start instruction nor the end instruction of pipeline processing is received from the user (NO in all steps S701, S703, and S704), the CPU 201 waits for an instruction from the user.

If a start instruction from the user is received (YES in step S703), the CPU 201 performs transmission prevention processing for unnecessary images (step S706). The start instruction can include information of time to start pipeline processing and information that species the period of pipeline processing. In this embodiment, as the transmission prevention processing for unnecessary images, the CPU 201 instructs the signal generation unit 205 to mask the control signal B 402 a predetermined number of times. Masking the control signal indicates, for example, not outputting a pulse signal that should originally be output by inhibiting output of the control signal or outputting a signal whose value is zero. By the transmission prevention processing for unnecessary images, it is possible to avoid output of image data remaining in each frame buffer due to interruption of pipeline processing to a communication line. On the other hand, if not a start instruction from the user but an end instruction from the user is received (NO in step S703 and YES in step S704), the CPU 201 notifies the function units of the end instruction and ends the processing (step S705).

The CPU 201 instructs the signal generation unit 205 to start generating the control signal A 401 and the control signal B 402 (step S707). For example, the generation start instruction can include information of time to start pipeline processing input by the user and information that specifies the period of pipeline processing. The register of the signal generation unit 205 resets display of the pulse generation counts of the control signal A 401 and the control signal B 402 and counts from 0. The reset of the register can be executed by the CPU 201. The CPU 201 stores the image data 310 to be input to the pipeline processing in the frame buffer A 221 until the final image data 310 designated by the user is input to the frame buffer A 221. For this reason, the CPU 201 monitors whether the pulse signal of the control signal A 401 is output. If a pulse signal is detected (YES in step S708), the CPU 201 determines whether the final image data 310 is stored in the frame buffer A 221. If the final image data 310 is not stored in the frame buffer A 221 (NO in step S709), the CPU 201 stores the next image data 310 in the frame buffer A 221 (step S711). For example, the CPU 201 can do the determination based on whether the image data 310 for which the sequence number of captured image data is 5 and the Timecode is 9:51:30.0 is stored in the frame buffer A 221. Note that if the CPU 201 first arranges 16 image data (9:50:30.0 to 9:50:30.15) in the frame buffer A 221, the Timecode of the next image data to be stored in the frame buffer A 221 is 9:50:30.16. That is, the CPU 201 stores, in the frame buffer A 221, the image data 310 corresponding to a value obtained by adding 1 to the value of the Timecode 320 of the image data 310 finally stored in the frame buffer A 221. On the other hand, if the final image data 310 is stored in the frame buffer A (YES in step S709), the processing waits until the final image data 310 is output by the transmission unit 212. If the final image data 310 is notified to the transmission unit 212 and output to the communication line, the CPU 201 instructs the signal generation unit 205 to stop generation of the control signal A 401 and the control signal B 402 (step S713). The CPU 201 returns to step S701 and waits for input of an instruction from the user. Note that the CPU 201 can recognize that the final image data 310 is notified to the transmission unit 212 by waiting for a time corresponding to the latency needed for the pipeline processing after the final image data 310 is stored in the frame buffer A 221. That is, since the pipeline processing of image data is always performed by a predetermined number of function units, the time (latency) needed for the processing is always constant. For example, the CPU 201 can calculate the latency by the product of the number of function units included in pipeline processing and the processing period of pipeline processing (the output period of the control signal A 401). On the other hand, upon receiving a stop instruction from the user before the final image data is stored in the frame buffer A 221 (NO in step S708 and YES in step S710), the CPU 201 instructs the signal generation unit 205 to stop generation of the control signals (step S713). The CPU 201 then returns to step S701 and waits for input of an instruction from the user.

In this way, for example, if the stop instruction of the user is received during execution of pipeline processing of the first image data set (YES in step S710), the CPU 201 waits for input of an instruction from the user. At this time, in some cases, a designation of the second image data set is received from the user in step S701, and the start instruction is received from the user in step S703. In this case, in step S706, the CPU 201 executes mask processing of the control signal B 402 a predetermined number of times such that processed data of the first image data set is not output to the communication line. In this way, control can be performed such that the processed data is not output from the input of the second image data set to the frame buffer A 221 until the output of the processed data to the frame buffer D 224.

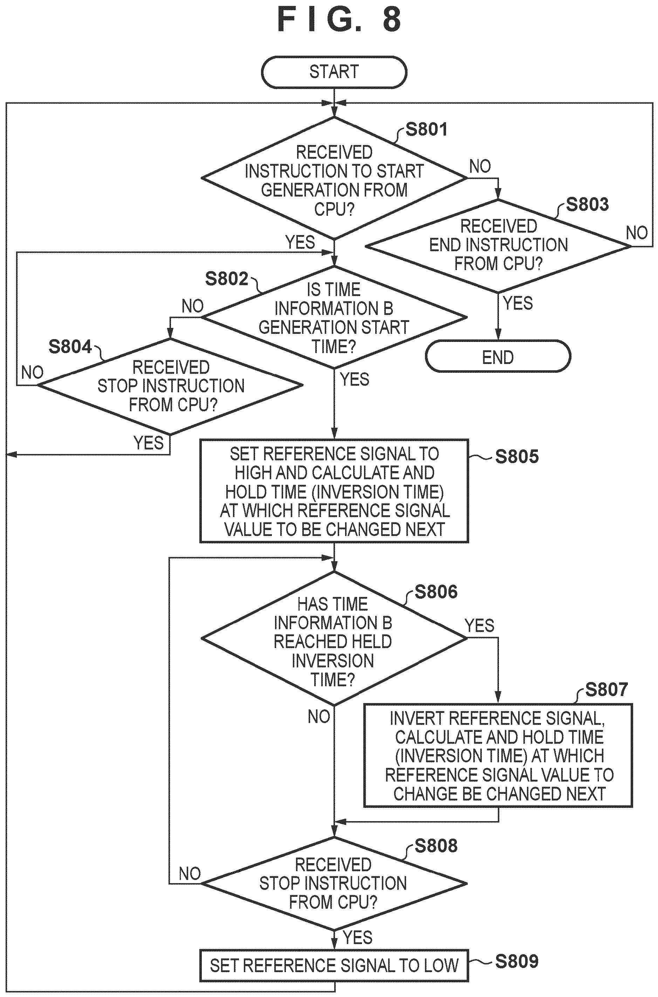

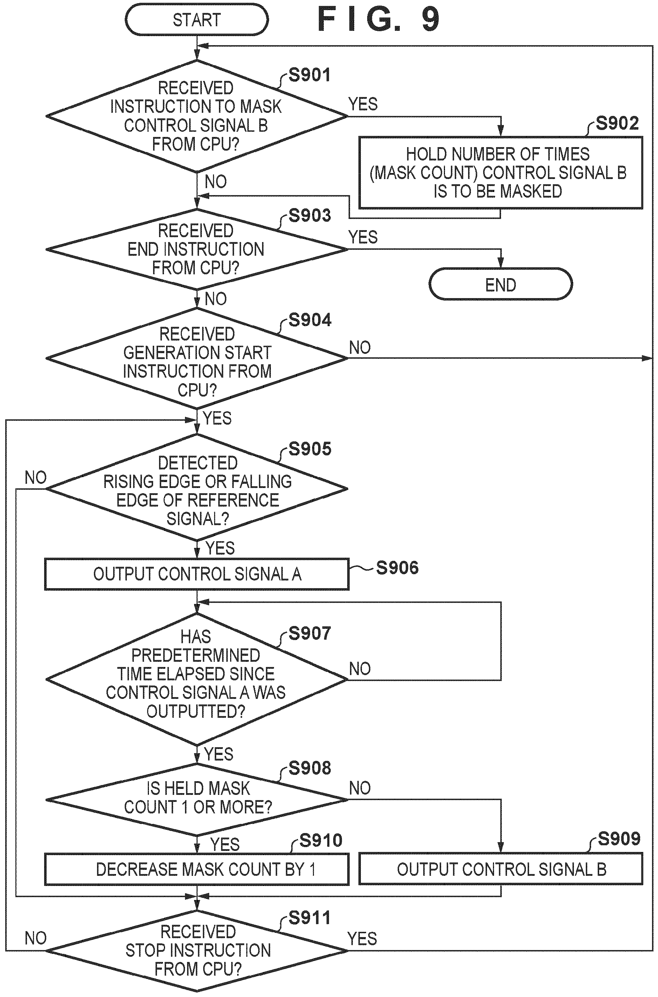

An example of an operation procedure when the signal generation unit 205 generates the control signal A 401 and the control signal B 402 will be described with reference to Figs. 8 and 9. First, Fig. 8 shows an example of an operation procedure when the reference signal generation unit 502 generates the reference signal 506 serving as the reference when generating the control signal A 401 and the control signal B 402. This procedure is started when reset of the signal generation unit 205 is released, and initial settings are completed. Note that at the start of the operation procedure, the value of the reference signal 506 can be LOW (the value is 0). Upon receiving the instruction to start generating the control signal A 401 and the control signal B 402 from the CPU 201 (YES in step S801), the reference signal generation unit 502 waits until the time information B 505 output from the timepiece unit 501 reaches the generation start time of the reference signal 506. The generation start time of the control signal A 401 and the control signal B 402 is the start time of pipeline processing. Note that the reference signal generation unit 502 may incorporate a timepiece maintained in synchronism with the input time information B 505. In this case, the reference signal generation unit 502 can execute the next step when the timepiece reaches the generation start time of the reference signal 506. If the end instruction is received before the generation start instruction is received from the CPU 201 (NO in step S801 and YES in step S803), the reference signal generation unit 502 ends the operation. If the time information B 505 reaches the generation start time (YES in step S802), the reference signal generation unit 502 inverts the reference signal to be output from LOW to HIGH (the value is 1), calculates the time (inversion time) at which the value of the reference signal is changed next, and holds it. For example, to calculate the inversion time, the period information of pipeline processing input from the CPU 201 can be used. As an example, if a period of 2 Hz is input as the period information, a signal of 1 Hz (the period is 1 sec) is output as the reference signal 506, and therefore, time 50 msec ahead is held as the inversion time. Note that if there is a design difference that the control signal generation unit 503 uses one of the rising edge and the falling edge or both of them, or divides the frequency of the reference signal 506, the reference signal 506 according to the design can be generated. Note that if the stop instruction is received from the CPU 201 before the time information B 505 reaches the generation start time (YES in step S804), the reference signal generation unit 502 returns to step S801 and waits for the generation start instruction. Next, every time the time information B 505 reaches the held inversion time (YES in step S806), the signal generation unit 205 repeats the operation of inverting the reference signal and holding the next inversion time until the end instruction is received from the CPU 201 (steps S807 and S808). Upon receiving the stop instruction from the CPU 201 (YES in step S808), the reference signal generation unit 502 sets the reference signal to LOW (step S809), returns to step S801, and waits for an instruction from the CPU 201. In this way, the reference signal generation unit 502 generates the reference signal 506 and outputs it to the control signal generation unit 503.

Fig. 9 shows an example of the operation procedure when the control signal generation unit 503 of the signal generation unit 205 generates the control signal A 401 and the control signal B 402. This procedure is started when reset of the signal generation unit 205 is released, and initial settings are completed. First, if an instruction to mask the control signal B 402 is received from the CPU 201 (YES in step S901), the control signal generation unit 503 holds the mask count (step S902). The mask count is the number of times of masking the control signal B 402. The instruction from the CPU 201 is notified to prevent transmission of unnecessary images based on step S706. That is, if the control signal B 402 is output before the first image data 310 designated by the user reaches the image notification unit 210, the image data 310 processed in the past may be output from the transmission unit 212. To avoid this, the output of the control signal B 402 is masked (i.e. the control signal B is not output) until the control signal A 401 is output a predetermined number of times. The mask count may be instructed by the CPU 201, or may be held as a preset fixed value by the signal generation unit 205. Note that since the predetermined number of times is a fixed value based on the number of image processes included in pipeline processing, the latency from the input of the first image data 310 designated by the user to the frame buffer A 221 until it reaches the image notification unit 210 is a fixed value. Upon receiving an end instruction from the CPU 201, the control signal generation unit 503 ends the operation (YES in step S903). Also, upon receiving a generation start instruction from the CPU 201, the control signal generation unit 503 starts detecting the rising edge or the falling edge of the reference signal 506 (YES in step S904). Upon detecting the rising edge or the falling edge of the reference signal 506, the control signal generation unit 503 outputs the control signal A 401 (step S906). The control signal A 401 is notified to the image processing unit A 231 to the image processing unit C 233 and the image notification unit 210. If a predetermined time elapses from the output of the control signal A 401 (YES in step S907), the control signal generation unit 503 determines whether the held mask count is 1 or more. If the mask count is 0 (NO in step S908), the control signal generation unit 503 outputs the control signal B 402 (step S909). A predetermined period from the output of the control signal A 401 to the output of the control signal B 402 is the predetermined period shown in Fig. 6. The predetermined period may be designated in the register as an initial setting or may be designated by the CPU 201 at the same time as the generation start instruction. On the other hand, if the held mask count is 1 or more (YES in step S908), the control signal generation unit 503 decrements the mask count by one without outputting the control signal B 402 (step S910). The control signal generation unit 503 repeats the operation of steps S905 to S910 until a stop instruction is received from the CPU 201 (NO in step S911), and upon receiving the stop instruction from the CPU 201 (YES in step S911), returns to step S901 and waits for an instruction from the CPU 201.

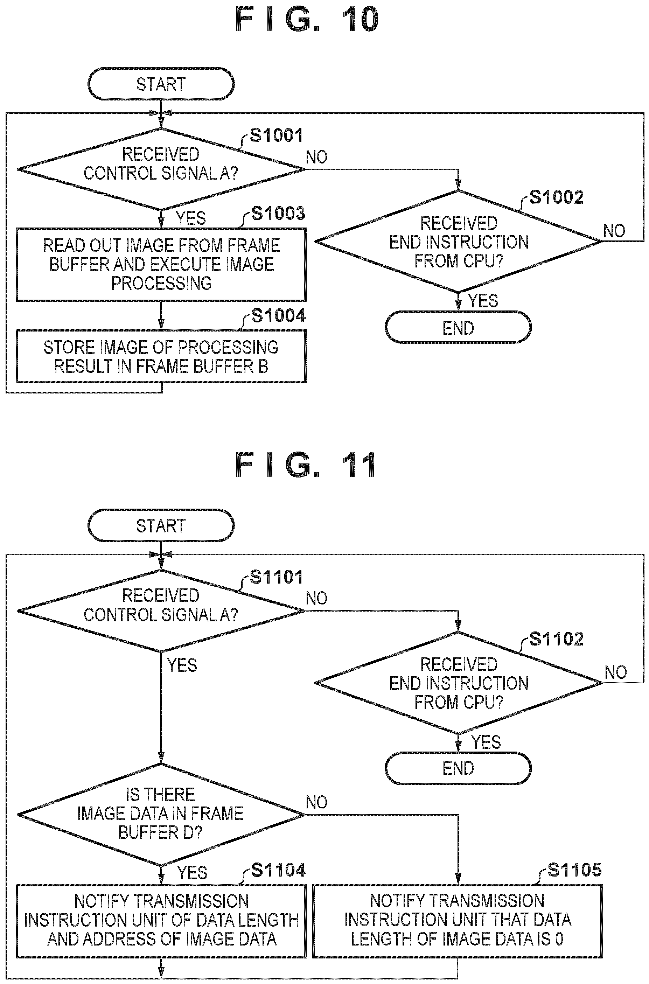

Next, the operation procedure of each function unit constituting pipeline processing will be described. Fig. 10 shows an example of the operation procedure of the image processing unit A 231. This procedure is started when reset of the image processing unit A 231 is released, and initial settings are completed. Upon receiving the control signal A 401 (YES in step S1001), the image processing unit A 231 reads out the image data 310 stored in the frame buffer A 221, performs image processing (step S1003), and stores the image data in the frame buffer B 222 (step S1004). The image processing unit A 231 repeats the operation of steps S1001, S1003, and S1004 until an end instruction is received from the CPU 201. Upon receiving an end instruction from the CPU 201 (YES in step S1002), the image processing unit A 231 ends the operation. Note that the image processing unit B 232 and the image processing unit C 233 operate in the same way as described above except the frame buffers to be used and image processing to be executed.

Fig. 11 shows an example of the operation procedure of the image notification unit 210. This procedure is started when reset of the image notification unit 210 is released, and initial settings are completed. Upon receiving the control signal A 401 (YES in step S1101), the image notification unit 210 determines the presence/absence of the image data 310 stored in the frame buffer D 224. If the image data 310 is stored (YES in step S1103), the image notification unit 210 notifies the transmission instruction unit 211 of the address and the data length of the image data 310 (step S1104). For example, the image notification unit 210 accesses the automatically calculated address of a pointer, thereby determining whether the header information of the image data 310 is formed in a predetermined format, and determining the presence/absence of the image data. If the header information of the image data 310 includes information of the data length (total data size) of the image data 310, the image notification unit 210 can acquire the address and the data length of the image data 310 stored in the frame buffer D 224. Here, the address of the image data 310 is the first address at which the image data 310 is stored. On the other hand, upon determining that the image data 310 is not stored in the frame buffer D 224 (NO in step S1103), the image notification unit 210 can notify the transmission instruction unit 211 that the data length of the image data 310 is 0 (step S1105). The image notification unit 210 repeats the operation of steps S1101, S1103, S1104, and S1105 until an end instruction is received from the CPU 201. Upon receiving an end instruction from the CPU 201 (YES in step S1102), the image notification unit 210 ends the operation.

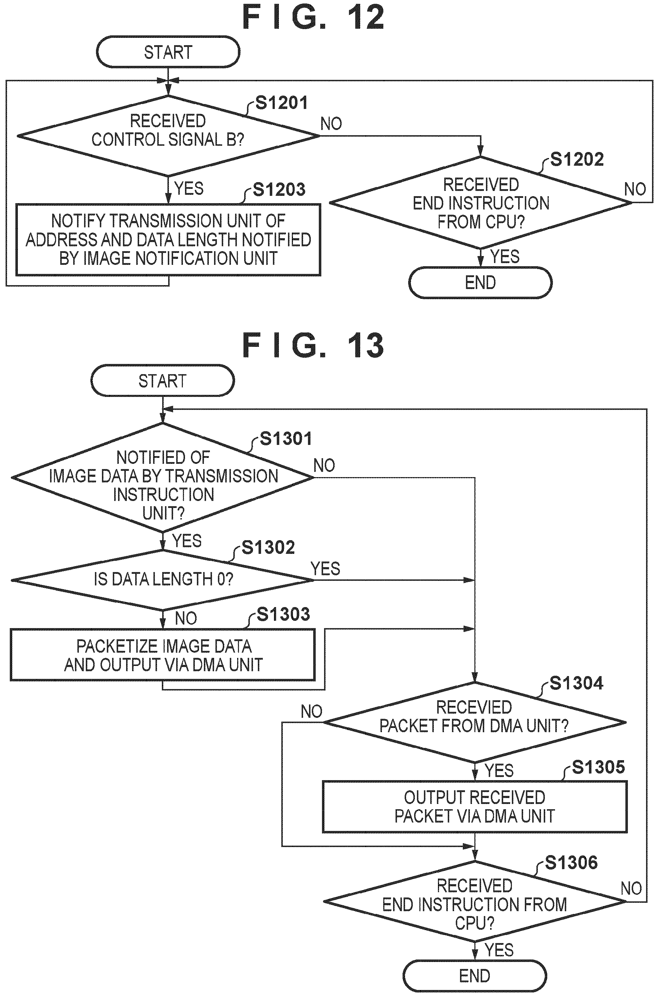

Fig. 12 shows an example of the operation procedure of the transmission instruction unit 211. This procedure is started when reset of the transmission instruction unit 211 is released, and initial settings are completed. Upon receiving the control signal B 402 (YES in step S1201), the transmission instruction unit 211 notifies the transmission unit 212 of the address and the data length notified by the image notification unit 210 (step S1203). The transmission instruction unit 211 repeats the operation of steps S1201 and S1203 until an end instruction is received from the CPU 201. Upon receiving an end instruction from the CPU 201 (YES in step S1202), the transmission instruction unit 211 ends the operation.

Fig. 13 shows an example of the operation procedure of the transmission unit 212. This procedure is started when reset of the transmission unit 212 is released, and initial settings are completed. Upon receiving a notification of the image data 310 from the transmission instruction unit 211 (YES in step S1301), the transmission unit 212 determines whether the notified data length is 0. If the data length is a value other than 0 (NO in step S1302), the transmission unit 212 packetizes the image data 310 and outputs it (step S1303). The transmission unit 212 acquires the image data 310 by accessing the notified address, and outputs the packetized image packet to the communication line via the DMA unit 204. Note that if the size of the image data 310 is large, the transmission unit 212 can fragment the image data 310 and packetize it. On the other hand, if the notified data length is 0 (YES in step S1302), the transmission unit 212 does not acquire the image data 310 and, therefore, the image data is not output. Also, upon receiving a packet from the DMA unit 203 (YES in step S1304), the transmission unit 212 outputs the received packet via the DMA unit 204 (step S1305). The transmission unit 212 repeats the operation of steps S1301 to S1305 until an end instruction is received from the CPU 201. Upon receiving an end instruction from the CPU 201 (YES in step S1306), the transmission unit 212 ends the operation.

As described above, in this embodiment, the CPU 201 controls the signal generation unit 205 such that the control signal B 402 is not output to the transmission instruction unit 211 until the first image data 310 of the image data set designated by the user or the like is stored in the frame buffer D 224. When performing image processes on the image data 310 by pipeline processing, the CPU 201 specifies the mask count based on the latency of the pipeline processing. The signal generation unit 205 does not output the control signal B 402 as many times as the mask count designated by the CPU 201. It is therefore possible to avoid output of image data 310 stored in the frame buffer 220 before the image data set designated by the user or the like is processed to the communication line. Image data to be output can be controlled by adding processing of only masking the control signal B 402 a predetermined number of times.

### (Second Embodiment)

In the first embodiment, an example in which the signal generation unit 205 masks the output of the control signal B 402, thereby controlling not to output unnecessary image data stored in the frame buffer A 221 to the frame buffer D 224 has been described. In this embodiment, a description will be made using an example in which the data length of image data 310 to be notified from an image notification unit 210 to a transmission instruction unit 211 is set to 0 during a predetermined period or a predetermined number of times, thereby controlling not to output the image data 310 to a communication line. Note that in this embodiment, differences from the first embodiment will be described, and except for these, the operations of function units are the same as in the first embodiment, and a description thereof will be omitted. For example, the operation of a CPU 201 is the same as the operation procedure shown in Fig. 7 except the contents of transmission prevention processing for unnecessary images in step S706. In the first embodiment, the CPU 201 instructs the signal generation unit 205 to mask the control signal B 402. In this embodiment, in place of or in addition to this, the CPU 201 instructs the image notification unit 210 to set the data length of the image data 310 to 0.

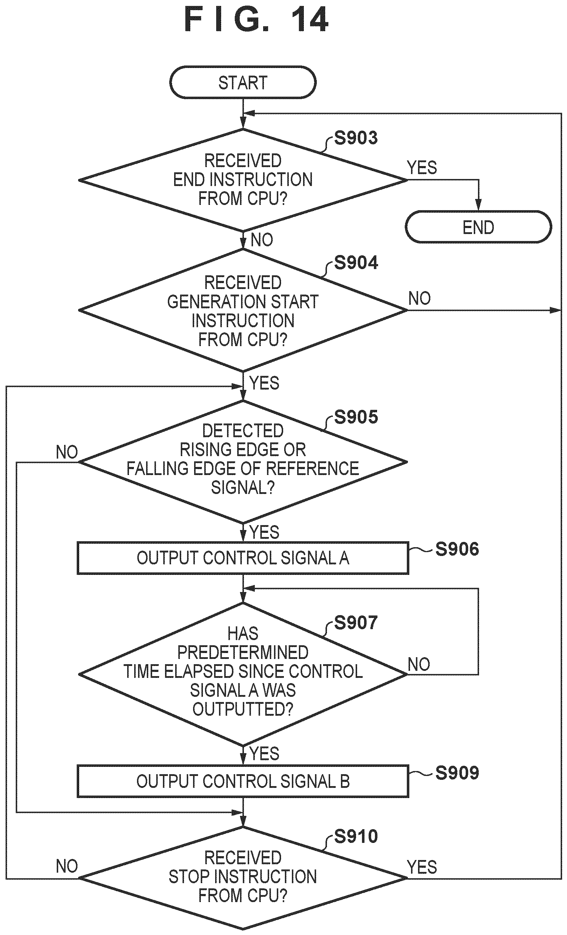

Fig. 14 shows an example of the operation procedure when a control signal generation unit 503 of a signal generation unit 205 generates a control signal A 401 and a control signal B 402. The same step numbers as in Fig. 9 indicate the same constituent elements, and a description thereof will be omitted. That is, in Fig. 9, the control signal generation unit 503 holds a mask count to mask the control signal B 402 based on an instruction from the CPU 201, and determines, based on the held mask count, whether to output the control signal B 402. In Fig. 14, since the control signal generation unit 503 does not receive the instruction to mask the control signal B 402, constituent elements associated with this processing are deleted. That is, based on a reference signal 506, the control signal B 402 is output a predetermined period after the output of the control signal A401.

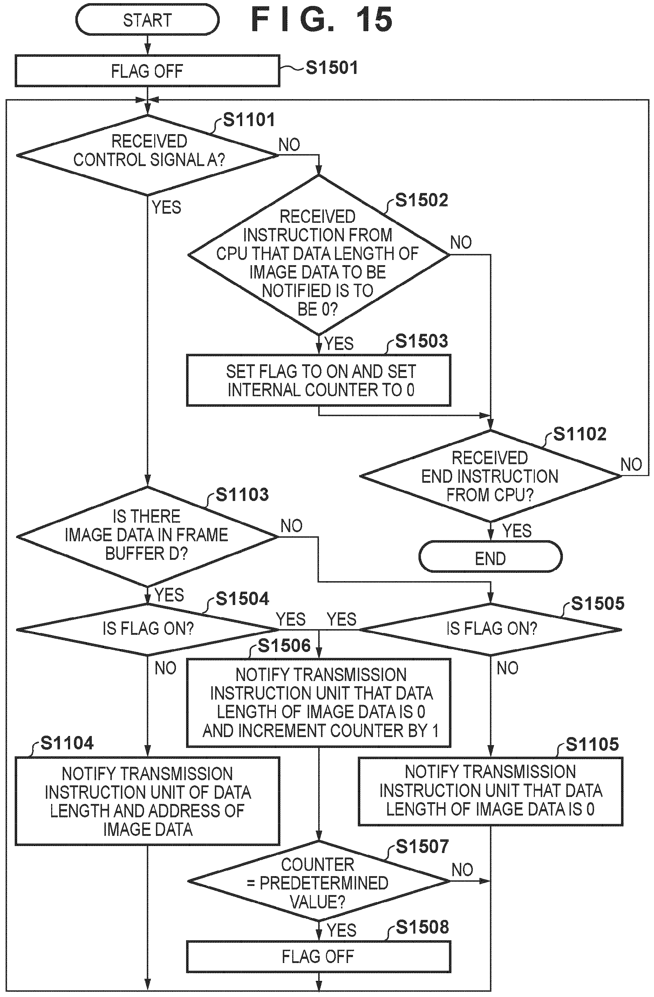

Fig. 15 shows an example of the operation procedure of the image notification unit 210. The same step numbers as in Fig. 11 indicate the same constituent elements, and a description thereof will be omitted. That is, the image notification unit 210 switches ON/OFF of a flag based on an instruction from the CPU 201, and controls a value to be notified as the data length of the image data 310. When the operation is started, the image notification unit 210 sets the flag to OFF (step S1501). The flag is used by the image notification unit 210 to determine whether to set the data length of the image data 310 to be notified to 0. Upon receiving, from the CPU 201, an instruction to set the data length of the image data to be notified to a transmission instruction unit 211 (YES in step S1502), the image notification unit 210 sets the flag to ON and sets the value of a counter to 0. The counter is used to count the number of times of notifying the data length of image data as 0. Upon receiving the control signal A 401 (step S1101), the image notification unit 210 determines the presence/absence of the image data 310 in a frame buffer D 224. If the image data exists in the frame buffer D 224 (YES in step S1103), and the flag is OFF (NO in step S1504), the image notification unit 210 notifies the transmission instruction unit 211 of the address and the data length of the image data 310 (step S1104). On the other hand, if the image data 310 exists in the frame buffer D 224 (YES in step S1103), and the flag is ON (YES in step S1504), the image notification unit 210 notifies the transmission instruction unit 211 that the data length of the image data 310 is 0 (step S1506). Also, in this case, the image notification unit 210 increments the counter by one. Even in a case where the image data 310 does not exist in the frame buffer D 224 (NO in step S1103), and the flag is ON (YES in step S1505), the image notification unit 210 notifies the transmission instruction unit 211 that the data length of the image data 310 is 0. In this case as well, the image notification unit 210 increments the counter by one (step S1506). That is, if the flag is ON, the image notification unit 210 notifies the data length of 0 regardless of the presence/absence of the image data 310 in the frame buffer D 224. Hence, the image data 310 is not output from a transmission unit 212. If the counter reaches a predetermined value (YES in step S1507), the image notification unit 210 sets the flag to OFF, returns to step S1101, and continues the operation (step S1508). If the counter does not reach the predetermined value (NO in step S1507), the image notification unit 210 returns to step S1101, and continues the operation. Like the mask count in the first embodiment, the predetermined value can be set based on the latency from the storage of the first image data designated by the user in a frame buffer A 221 until it is stored in the frame buffer D 224. For example, the predetermined value may be set by an initial setting after reset of the image notification unit 210 is released, or may be a value stationarily set in the image notification unit 210. On the other hand, if the image data does not exist in the frame buffer D 224 (NO in step S1103), and the flag is OFF (NO in step S1505), the image notification unit 210 notifies the transmission instruction unit 211 that the data length of the image data is 0.

As described above, in this embodiment, the CPU 201 controls the image notification unit 210 to notify the transmission instruction unit 211 that the data length of the image data is 0 until the first image data 310 of the designated image data set is stored in the frame buffer D 224. Since the transmission instruction unit 211 is notified that the data length is 0 regardless of the presence/absence of the data in the frame buffer D 224, the transmission instruction unit 211 does not make an output notification to the transmission unit 212. Alternatively, the transmission instruction unit 211 also notifies the transmission unit 212 that the size of image data 311 is 0. This makes it possible to avoid output of the image data 310 stored in a frame buffer 220 before the image data set designated by the user or the like is processed to the communication line. Additionally, with the configuration according to this embodiment, image data to be output can be controlled by adding processing of only correcting the output of the image notification unit 210 without correcting the conventional operation of the control signal generation unit 503.

### (Third Embodiment)

In the first embodiment, an example in which the signal generation unit 205 masks the output of the control signal B 402, thereby controlling not to output unnecessary image data stored in the frame buffer A 221 to the frame buffer D 224 has been described. In this embodiment, a control signal C 1601 different from a control signal A 401 that is input to an image processing unit A 231 to an image processing unit C 233 is input to an image notification unit 210. The output of the control signal C 1601 is masked, thereby controlling not to output image data 310. Note that in this embodiment as well, differences from the first embodiment will be described, and except for these, the operations of function units are the same as in the first embodiment, and a description thereof will be omitted. For example, the operation of a CPU 201 is the same as the operation procedure shown in Fig. 7 except the contents of transmission prevention processing for unnecessary images in step S706. In the first embodiment, the CPU 201 instructs the signal generation unit 205 to mask the output of the control signal B 402. In this embodiment, the CPU 201 instructs to mask the output of the control signal C 1601 to be notified to the image notification unit 210. Note that the operation of the image notification unit 210 is the same as in Fig. 11, but the control signal input to the image notification unit 210 changes from the control signal A 401 to the control signal C 1601, unlike the first embodiment.

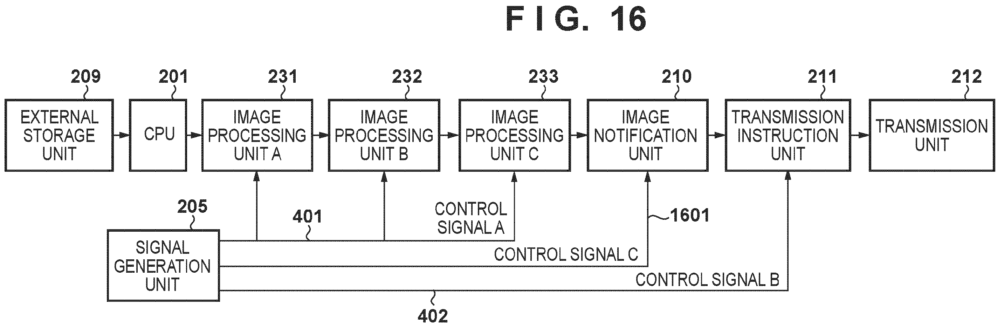

Fig. 16 shows an example of function units constituting pipeline processing according to this embodiment. The same reference numbers as in Fig. 4 denote the same constituent elements, and a description thereof will be omitted. That is, a signal generation unit 205 generates three control signals, that is, the control signal A 401, a control signal B 402, and the control signal C 1601 and outputs these to the image processing unit A 231 to the image processing unit C 233, a transmission instruction unit 211, and the image notification unit 210, respectively. The control signal C 1601 is a control signal having the same period and the same phase as the control signal A 401, but the output destination is different. In addition, the control signal C 1601 can be the target of mask processing by the signal generation unit 205.

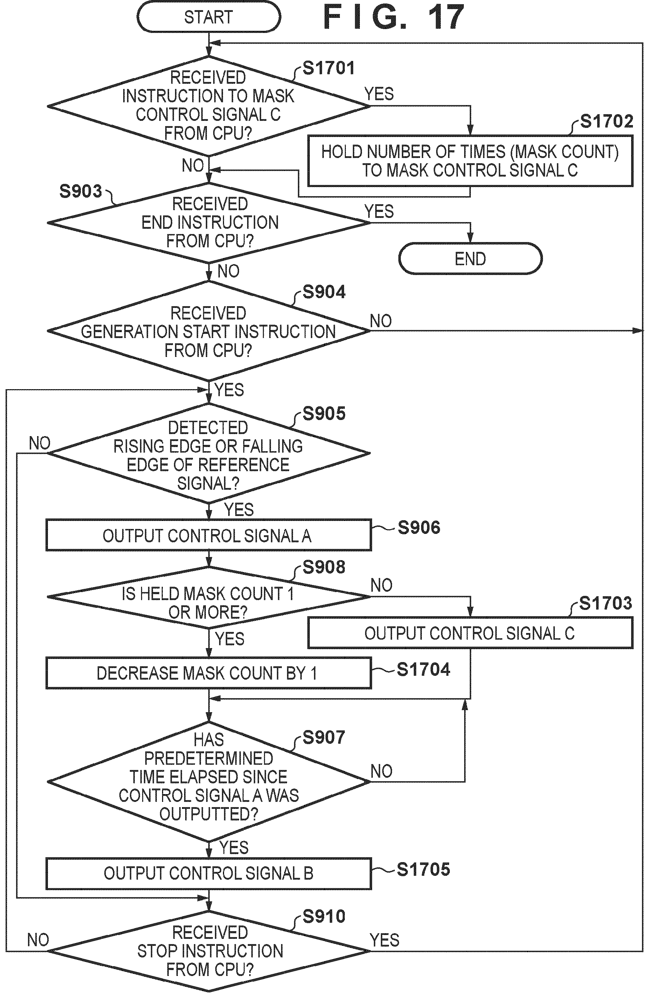

Fig. 17 shows an example of the operation procedure of a control signal generation unit 503 of the signal generation unit 205. The same step numbers as in Fig. 9 indicate the same constituent elements, and a description thereof will be omitted. That is, in Fig. 9, the control signal generation unit 503 holds a mask count to mask the control signal B 402 based on an instruction from the CPU 201, and controls, based on the held mask count, whether to output the control signal B 402. In Fig. 17, the control signal generation unit 503 holds a mask count to mask the control signal C 1601 based on an instruction from the CPU 201, and controls, based on the held mask count, whether to output the control signal C 1601. Upon receiving an instruction to mask the control signal C 1601 from the CPU 201 (YES in step S1701), the control signal generation unit 503 holds the mask count of the control signal C 1601 (step S1702). The mask count is the number of times of masking the control signal C 1601. Upon detecting the rising edge or the falling edge of a reference signal (YES in step S905), the control signal generation unit 503 outputs the control signal A 401 (step S906) and determines the held mask count. If the mask count is 0 (NO in step S908), the control signal generation unit 503 outputs the control signal C 1601 (step S1703). On the other hand, if the mask count is 1 or more (YES in step S908), the control signal generation unit 503 decrements the mask count by one without outputting the control signal C 1601 (step S1704). If a predetermined time elapses from the output of the control signal A 401 (YES in step S907), the control signal generation unit 503 outputs the control signal B 402 (step S1705).

As described above, in this embodiment, the CPU 201 controls the control signal generation unit 503 such that the control signal C 1601 is not output to the image notification unit 210 until the first image data 310 of the designated image data set is stored in a frame buffer D 224. During the absence of input of the control signal C 1601, the image notification unit 210 does not make a notification to the transmission instruction unit 211. This makes it possible to avoid output of the image data 310, that is stored in a frame buffer 220 before the image data set designated by the user or the like is processed, to the communication line.

### (Fourth Embodiment)

In the first to third embodiments, a description has been made using examples premised on that the function units constituting pipeline processing operate in accordance with the period of the control signal A 401 output from the control signal generation unit 503, and the latency of the pipeline processing is fixed. That is, in these examples, the CPU 201 specifies the latency of pipeline processing, and instructs the signal generation unit 205 or the image notification unit 210 not to output a notification to the transmission unit 212 during a period corresponding to the latency. In this embodiment, identification information capable of identifying an image data set to which image data 310 belongs is used to control not to output unnecessary image data stored in a frame buffer A 221 to a frame buffer D 224. For example, the identification information can be the sequence number or Timecode 320 of captured image data 300. For this reason, this embodiment is premised on that the sequence number and the Timecode 320 of captured image data associated with the image data 310 stored in an external storage unit 209 and each frame buffer 220 are maintained (are not changed). A CPU 201 notifies an image notification unit 210 of the sequence number and the Timecode 320 of the captured image data associated with the first image data 310 of the image data set designated by the user or the like. For example, based on the input of a control signal A 401, the image notification unit 210 compares the values of the sequence number and the Timecode 320 of the captured image data associated with the image data 310 stored in the frame buffer D 224 with values notified from the CPU 201. Until these match, the image notification unit 210 notifies the transmission instruction unit 211 that the data length of image data 311 is zero. After these match, the image notification unit 210 notifies the transmission instruction unit 211 of the data length of the image data acquired from the header information of the image data 310 in the frame buffer D 224. Hence, the CPU 201 can control not to output unnecessary image data stored in the frame buffer A 221 to the frame buffer D 224 without specifying the latency of pipeline processing. For example, even if the latency of pipeline processing varies, this technique can be applied. The operations of function units according to this embodiment will be described below. Note that in this embodiment as well, differences from the first embodiment will be described, and except for these, the operations of function units are the same as in the first embodiment, and a description thereof will be omitted. For example, the operation of the CPU 201 is the same as the operation procedure shown in Fig. 7 except the contents of transmission prevention processing for unnecessary images in step S706. In this embodiment, the CPU 201 notifies the image notification unit 210 of the sequence number and the Timecode 320 of captured image data associated with the first image data 310 of the image data set designated by the user.

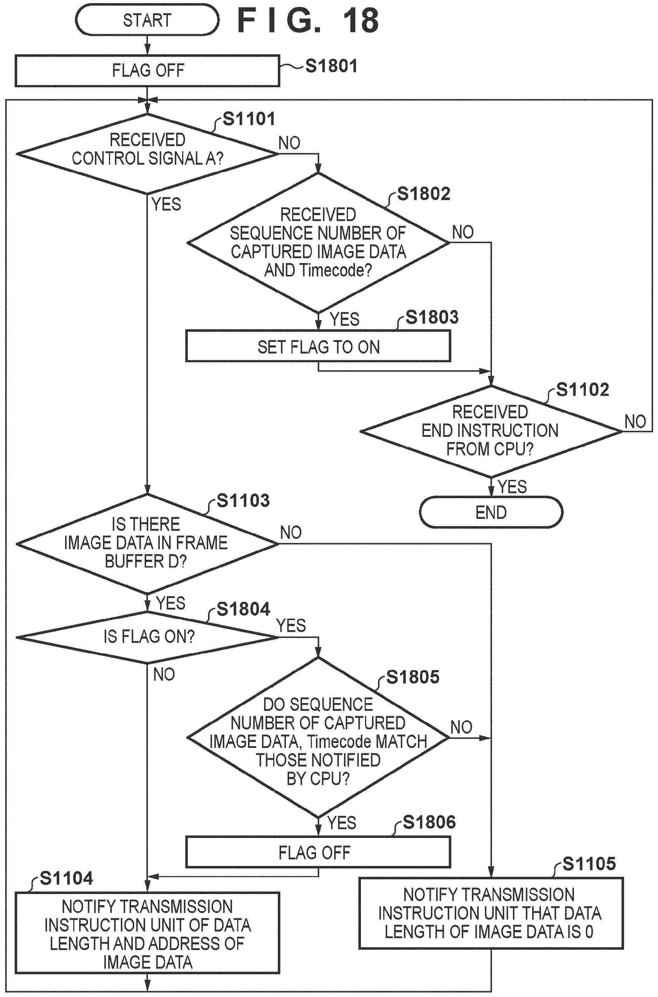

Fig. 18 shows an example of the operation procedure of the image notification unit 210. The same step numbers as in Fig. 11 indicate the same constituent elements, and a description thereof will be omitted. That is, the image notification unit 210 switches ON/OFF of a flag based on reception of the sequence number and the Timecode 320 of captured image data from the CPU 201, and controls a value to be notified as the data length of image data. When the operation is started, the image notification unit 210 sets the flag to OFF (step S1801). The flag is used by the image notification unit 210 to determine whether to set the data length of the image data to be notified to 0. Upon receiving the sequence number and the Timecode 320 of the captured image data from the CPU 201 (YES in step S1802), the image notification unit 210 sets the flag to ON (step S1803). Upon receiving the control signal A401 (step S1101), the image notification unit 210 determines the presence/absence of the image data 310 in the frame buffer D 224. If the image data 310 exists in the frame buffer D 224 (YES in step S1103), and the flag is OFF (NO in step S1804), the image notification unit 210 notifies the transmission instruction unit 211 of the address and the data length of the image data 310 (step S1104). On the other hand, if the image data 310 exists in the frame buffer D 224 (YES in step S1103), and the flag is ON (YES in step S1804), the image notification unit 210 determines whether the image data 310 matches the image data notified from the CPU 201. That is, the image notification unit 210 determines whether the sequence number and the Timecode 320 of the captured image data associated with the image data 310 match the sequence number and the Timecode 320 of the captured image data notified from the CPU 201. If these match (YES in step S1805), the image notification unit 210 sets the flag to OFF (step S1806), and notifies the transmission instruction unit 211 of the address and the data length of the image data 310 (step S 1104). On the other hand, if these do not match (NO in step S1805), the image notification unit 210 notifies the transmission instruction unit 211 that the data length of the image data is 0 (step S1105). Also, if the image data does not exist in the frame buffer D 224 (NO in step S1103), the image notification unit 210 notifies the transmission instruction unit 211 that the data length of the image data is 0. That is, if the flag is ON, the image notification unit 210 notifies the data length of 0 regardless of the presence/absence of the image data in the frame buffer D 224. Hence, the image data is not output from the transmission unit 212. For example, in some cases, when pipeline processing of the first image data set is being executed, the stop instruction of the user is received, and the designation of the second image data set is received at the time of the next start instruction from the user. In this case, the sequence number and the Timecode 320 of captured image data corresponding to the second image data set are notified to the image notification unit 210. The image notification unit 210 notifies the transmission instruction unit 211 that the data length of the image data is 0 until the sequence number and the Timecode 320 of the captured image data corresponding to the second image data set are detected from the image data in the frame buffer D 224. In other words, the image notification unit 210 notifies the transmission instruction unit 211 that the data length of the image data is 0 during the sequence number and the Timecode 320 of the captured image data corresponding to the first image data set are being detected from the image data in the frame buffer D 224. In this way, control can be performed such that the processed data of the first image data set is not output from the input of the second image data set to the frame buffer A 221 until the processed data is detected in the frame buffer D 224.

As described above, in this embodiment, the CPU 201 controls such that the image notification unit 210 does not make a notification to the transmission instruction unit 211 until the first image data 310 of the designated image data set is stored in the frame buffer D 224. The image notification unit 210 detects, based on the sequence number and the Timecode 320 of the captured image data notified from the CPU 201, that the image data 310 to be output has reached the frame buffer D 224, and does not make a notification to the transmission instruction unit 211 till then. This makes it possible to avoid output of the image data 310, that is stored in the frame buffer 220 before the image data set designated by the user or the like is processed, to the communication line. Additionally, according to the configuration of this embodiment, since it does not depend on the configuration of image processing in the camera adapter 111, this technique can be applied to pipeline processing with variable latency or a configuration other than pipeline processing.

As a modification of this embodiment, if the image notification unit 210 detects that the image data 310 to be output has reached the frame buffer D 224, the CPU 201 or the signal generation unit 205 may be notified of it. For example, the CPU 201 notifies the image notification unit 210 of the sequence number and the Timecode 320 of the captured image data and causes it to determine whether the first image data 310 of the image data set designated by the user or the like is stored in the frame buffer D 224. In addition, the CPU 201 notifies the signal generation unit 205 to mask a control signal B 402. Upon detecting that the first image data 310 of the image data set is stored in the frame buffer D 224, the image notification unit 210 makes a notification to the CPU 201. Based on this notification, the CPU 201 notifies the signal generation unit 205 to cancel the mask. Note that the image notification unit 210 may notify the signal generation unit 205 to cancel the mask. This makes it possible to avoid output of the image data 310, that is stored in the frame buffer 220 before the image data set designated by the user or the like is processed, to the communication line.

Note that a description has been made above using an example in which the CPU 201 instructs the number of times of masking the control signal B 402 or a control signal C 1601 or the number of times of notifying, by the image notification unit 210, that the data length of the image data 310 is 0. However, the CPU 201 may instruct a predetermined period. For example, when executing image processes by pipeline processing, time until the image data 310 reaches the frame buffer D 224 can be calculated based on the number of image processes included in the pipeline processing and the period of the pulse signal of the control signal A 401. The CPU 201 notifies each function unit of the thus calculated predetermined period, thereby controlling such that the transmission unit 212 does not output the image data 310 in the frame buffer D 224 during the period. Also, in the above-described embodiment, a description has been made using an example in which image processes are executed by pipeline processing. However, the present invention is not limited to application of the technique to pipeline processing. For example, the technique can be applied to an arbitrary image processing system that includes a plurality of image processes and needs a predetermined period from input to the image data 310 to output of an image processing result. Note that the target of image processing may be the captured image data 300 or the image data 310. That is, the image data 310 and the captured image data 300 can be replaced with each other. Furthermore in this embodiment, the functional diagrams described in the embodiments are merely examples and, for example, some function units may not be included. For example, the transmission instruction unit 211 and the transmission unit 212 may be integrated. In this case, for example, the control signal B 402 can directly be output to the transmission unit 212. Also, the image notification unit 210 can directly notify the transmission unit 212 of the address and the data length of the image data 310. Also, in the above-described embodiments, a description has been made using an example in which the transmission instruction unit 211 is notified that the data length of the image data 310 is 0. However, the image notification unit 210 may not make a notification to the transmission instruction unit 211. Alternatively, the image notification unit 210 may notify that the image data 310 does not exist in the frame buffer D 224 using a method other than setting the data length of the image data 310 to 0. For example, the image notification unit 210 may make a notification directly indicating that the data does not exist in the frame buffer D 224 to the transmission instruction unit 211.

The present invention can be implemented by supplying a program configured to implement one or more functions of the above-described embodiments to a system or an apparatus via a network or a storage medium and causing one or more processors in the computer of the system or the apparatus to read out the program and execute it. The present invention can also be implemented by a circuit (for example, an ASIC) that implements one or more functions.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card.

While the present invention has been described with reference to embodiments, it is to be understood that the invention is not limited to the disclosed embodiments but is defined by the scope of the following claims.

## Claims

1. A terminal apparatus comprising:
a processing means (202) configured to perform processing of accepting input of an image data set formed by a plurality of image data, generating processed data by performing one or more image processes on the image data, and executing output of the processed data to an output buffer, the processing needing a predetermined time from the input to the output;
a transfer means (212) configured to read out the processed data from the output buffer and output the processed data to a communication line; and
a control means (201) configured to control such that the processed data stored in the output buffer is not output to the communication line during a predetermined time from the input of the image data of the image data set to the processing means until first processed data of the image data set is output to the output buffer.

2. The apparatus according to claim 1, wherein
the processing means (202) includes a plurality of image processing means (231, 232, 233) configured to execute a series of image processes by pipeline processing, and a plurality of buffers (221, 222, 223, 224) associated with the plurality of image processing means (231, 232, 233),
a first image processing means (231) included in the plurality of image processing means (231, 232, 233) reads out the image data from an input buffer (221) which is included in the plurality of buffers (221, 222, 223, 224) and to which the image data is input, generates first processed data by performing a first image process included in the series of image processes on the image data, and outputs the first processed data to a first buffer (222) included in the plurality of buffers (221, 222, 223, 224) and associated with the first image processing means,
a second image processing means (232) included in the plurality of image processing means (231, 232, 233) reads out the first processed data from the first buffer (222), generates second processed data by performing a second image process different from the first image process included in the series of image processes on the first processed data, and outputs the second processed data to a second buffer (223) included in the plurality of buffers (221, 222, 223, 224) and associated with the second image process, and
a buffer included in the plurality of buffers (221, 222, 223, 224) and associated with an image processing means configured to execute a final image process in the series of image processes is the output buffer (224).

3. The apparatus according to claim 2, wherein
in a case where the terminal apparatus accepts a switching instruction to switch a target of the pipeline processing to a second image data set during execution of the pipeline processing on a first image data set, the control means (201) controls such that the processed data stored in the output buffer (224) is not output to the communication line at least from the input of image data of the second image data set to the processing means until first processed data of the second image data set is output to the output buffer (224).

4. The apparatus according to claim 2 or 3, wherein
in a case where each of the plurality of image processes included in the series of image processes in the pipeline processing is executed based on a common timing signal, the control means (201) specifies the predetermined time based on the number of image processes forming the pipeline processing.

5. The apparatus according to claim 1, wherein
identification information, capable of specifying that each image data belongs to the image data set, is associated with each of the plurality of image data belonging to the image data set, and the identification information is configured to be maintained in the processed data even after the processing by the processing means is performed,
the terminal apparatus further comprises a detection means (210) configured to detect, based on the identification information associated with the processed data output to the output buffer, that the first processed data of the image data set is output to the output buffer, and
the control means (201) controls such that the processed data output to the output buffer is not output to the communication line at least from the input of the image data of the image data set to the processing means until the detection means detects that the first processed data of the image data set is output to the output buffer (224).

6. The apparatus according to claim 5, wherein
in a case where the terminal apparatus accepts a switching instruction to switch a target of the image processes to a second image data set during execution of the image processes on a first image data set, the control means (201) controls such that the processed data stored in the output buffer is not output to the communication line at least during a period from the input of image data of the second image data set to the processing means and until the identification information of the processed data detected by the detection means in the output buffer is identification information corresponding to the first image data set.

7. The apparatus according to any one of claims 1 to 6, wherein
the control means (201) controls such that an output instruction to output the processed data stored in the output buffer to the communication line is not input to the transfer means (212) during the predetermined period, and the output instruction is input to the transfer means after the predetermined period.

8. The apparatus according to any one of claims 1 to 6, wherein
upon receiving a notification indicating that the processed data to be transferred does not exist in the output buffer, the transfer means operates not to output the processed data stored in the output buffer to the communication line, and
the control means (201) controls to make a notification indicating that an image to be output does not exist to the transfer means during the predetermined period.

9. A control method executed by a terminal apparatus, comprising:
performing processing (S 1003) of accepting input of an image data set formed by a plurality of image data, generating (S 1003) processed data by performing one or more image processes on the image data, and executing (S 1004) output of the processed data to an output buffer, the processing needing a predetermined time from the input to the output;
reading out (S 1303) the processed data from the output buffer and outputting the processed data to a communication line; and
controlling (S706) such that the processed data stored in the output buffer is not output to the communication line during a predetermined time from the input of the image data of the image data set to the processing until first processed data of the image data set is output to the output buffer.

10. A program comprising instructions which, when executed by a computer, cause the computer to perform the method defined in claim 9.
